# EUROPÄISCHE PATENTSCHRIFT

(11) **EP 2 941 101 B1**
(45) Veröffentlichungstag und Bekanntmachung des Hinweises auf die Patenterteilung: **14.08.2019**
(21) Anmeldenummer: 15161737.0
(22) Anmeldetag: 30.03.2015
(51) Int. Cl.: H05B 37/02

(54) **BELEUCHTUNGSSYSTEM MIT EINER MEHRZAHL VON GEKOPPELTEN LEUCHTEN UND BEWEGUNGSMELDERN**
LIGHTING SYSTEM WITH A PLURALITY OF COUPLED LUMINAIRES AND MOTION DETECTORS
SYSTÈME D'ÉCLAIRAGE DOTÉ D'UNE PLURALITÉ D'ÉCLAIRAGES COUPLÉS ET DE DÉTECTEURS DE PRÉSENCE

(30) Priorität: 28.03.2014 DE 102014004434
(43) Veröffentlichungstag der Anmeldung: 04.11.2015
(73) Patentinhaber: ITZ Innovations- und Technologiezentrum GmbH, 59759 Arnsberg (DE)
(72) Erfinder: Busch, Ralf, 59759 Arnsberg (DE); Sibahi, Chaled, 59755 Arnsberg (DE); Kremer, Thomas, 57392 Schmallenberg (DE)
(74) Vertreter: Lippert Stachow Patentanwälte Rechtsanwälte

(56) Entgegenhaltungen:
- EP-A2- 2 512 209
- WO-A1-03/098977
- WO-A1-2009/003279
- DE-A1-102012 204 579
- US-A1- 2012 038 281

## Beschreibung

Die Erfindung betrifft eine Beleuchtungssystem, umfassend eine Mehrzahl von gekoppelten Leuchten und Bewegungsmeldern sowie ein Verfahren zu dessen Betrieb.

Derartige Beleuchtungssysteme sind auf dem Gebiet wohl bekannt und werden insbesondere für Gebäudeinstallationen in Großraumbüros, zur Beleuchtung von Tiefgaragen oder auch zu Straßen- oder Wegbeleuchtungen eingesetzt. Ein solches Beleuchtungssystem ist beispielsweise in der Offenlegungsschrift DE 10 2012 204 579 A1 beschrieben. Dabei weist jede Leuchte zur Kommunikation mit den anderen Leuchten eine drahtlose Kommunikationseinrichtung auf, wobei zumindest ein Teil der Leuchten Objektsensoren zur Bewegungs- oder Präsenzerfassung umfassen und Informationen über den aktuellen Betriebsmodus bzw. eine Präsenzerfassung zwischen den Leuchten über die drahtlose Kommunikationseinrichtung ausgetauscht wird. Für die Kommunikation werden dabei den Leuchten Bereichsadressen bzw. Gruppenadressen zugeordnet. Ein derartiges Beleuchtungssystem ist zwar einerseits sehr flexibel einstellbar, andererseits ist der Inbetriebnahme-Aufwand erheblich und darüber ist die Realisierung eines solchen Beleuchtungssystems vergleichsweise kostenintensiv. Die WO 03/098971 betrifft ein Beleuchtungssystem umfassend eine Mehrzahl von nebeneinander angeordneten Leuchteneinheiten, die jeweils zwei Kommunikationsschnittstellen zur Kommunikation mit den benachbarten Leuchteneinheiten, eine Steuereinrichtung sowie Schnittstellen zum Anschließen eines Objektsensors und eines Lichtssensors umfassen, wobei die Steuereinrichtung ein internes Betriebsgerät zum Speisen eines Leuchtmittels ansteuert und wobei die Steuereinrichtung eine Nennbetriebs-Zeitschaltung umfasst und eingerichtet ist, nach dem Erfassen eines Objekterfassungssignals sowohl eine zugeordnete Objekterfassungsnachricht über die beiden Kommunikationsschnittstellen an ihre beiden benachbarten Leuchteinheiten zu übermitteln als auch einen Betriebsmoduswechsel auf Nennbetrieb an dem internen Betriebsgerät zum Betrieb des Leuchtmittels zu steuern, sowie eine Betriebs- Zeitspaltung zu starten, wenn der Lichtsensor einen Niedriglichtzustand zeigt.

Der Erfindung liegt die Aufgabe zugrunde, ein Beleuchtungssystem sowie ein diesbezügliches Verfahren zu dessen Betrieb einzugeben, welches vergleichsweise kostengünstig zusammengestellt und darüber hinaus ohne großen Aufwand konfiguriert bzw. parametrisiert werden kann.

Diese Aufgabe wird vorrichtungsseitig durch ein Beleuchtungssystem gelöst, umfassend eine Mehrzahl von Primärleuchten, welche jeweils ein Leuchtmittel, eine an zumindest zwei Digitalbus-Schnittstellen angeschlossene Steuereinrichtungen wie Controller sowie zumindest eine Sensorschnittstelle zum Anschließen eines internen oder externen Objektsensors zur Bewegungs- oder Präsenzerfassung und eines internen oder externen Lichtsensors zur Erfassung eines Niedriglichtzustandes. Das erfindungsgemäße Beleuchtungssystem weist ferner zumindest ein von der Steuereinrichtung ansteuerbares, internes Betriebsgerät zum Einstellen von zumindest zwei Betriebsmodi zum Speisen des in wenigstens zwei Leuchtzuständen betreibbaren Leuchtmittels auf. Die Mehrzahl von Primärleuchten ist steuerungstechnisch über Digitalbusabschnitte seriell verschaltet, derart, dass mindestens eine der Primärleuchten über jeweils eine der zumindest zwei Digitalbus-Schnittstellen mit einer ersten benachbarten Primärleuchte aus der Mehrzahl der Primärleuchten und über jeweils die andere der zumindest zwei Digitalbus-Schnittstellen mit einer zweiten aus der Mehrzahl der Primärleuchten verbunden ist. Jede der Steuereinrichtungen weist dabei eine Nennbetrieb-Zeitschaltung auf und ist dazu eingerichtet, eine Objektpräsenz über die zumindest eine Sensorschnittstelle zu erfassen, wobei die der Objektpräsenz erfassende Primärleuchte als veranlassende Primärleuchte dazu eingerichtet ist, sowohl eine zugeordnete Objekterfassungsnachricht über die zwei Digitalbus-Schnittstellen an die Steuereinrichtungen ihrer beiden benachbarten Primärleuchten zu übermitteln, als auch dazu eingerichtet ist, einen Betriebsmodus-Wechsel auf "Nennbetrieb" an dem zugehörigen internen Betriebsgerät der veranlassenden Primärleuchte zum Betrieb des Leuchtmittels zu steuern und die Nennbetrieb-Zeitschaltung zu starten, wenn an der zugehörigen mindestens einen Sensorschnittstelle ein Niedriglichtzustand erfasst wird oder vorliegt. Mit dem Starten der Nennbetrieb-Zeitschaltung wird die abgelaufene

Zeit nach dem Einstellen des Nennbetriebs gemessen, um insbesondere zu erfassen, d.h. zu erkennen, wenn die gemessene Nennbetriebszeit eine vorgegebene Nennbetriebshaltezeit erreicht.

Aufgrund des beschriebenen Aufbaus des erfindungsgemäßen Beleuchtungssystems, in welcher die angegebenen Primärleuchten über Digital-Busabschnitte seriell verschaltet sind, und eine vorgegebene Primärleuchte zunächst mit ihren beiden direkt benachbarten Leuchten Steuerungsinformation austauschen kann, vereinfacht sich die Konfiguration. Ferner erübrigt sich eine aufwendige Adressierung der einzelnen Komponenten am Digitalbus in den meisten Fällen. Darüber hinaus stellt sich das erfindungsgemäße Beleuchtungssystem als sehr robust und zuverlässig heraus und kann insofern auch in Sicherheits-relevanten Bereichen eingesetzt werden, in welchen beispielsweise das obenstehend beschriebene herkömmliche Beleuchtungssystem aufgrund von eventuell auftretenden Funkstörungen nicht einsetzbar ist. Ferner bietet das erfindungsgemäße Beleuchtungssystem den Vorteil, dass es die Möglichkeit bietet, herkömmliche Leuchten mit bestimmten Erweiterungen einzusetzen.

Mit der Übermittlung einer Präsenzerfassung in Form einer Objekterfassungsnachricht an beide Nachbarn einer Primärleuchte können diese je nach Konfiguration beispielsweise auf Nennbetrieb geschaltet werden und/oder die Information der Objekterfassung an einer der Primärleuchten in vorgegebener Weise an weitere Primärleuchten innerhalb der seriellen Verschaltung weitergegeben werden. Durch die Festlegung solcher Regeln kann das erfindungsgemäße System an eine Vielzahl von spezifischen Beleuchtungsaufgaben angepasst werden, ohne dass eine aufwendige zentrale Steuerung notwendig ist.

Mit der beschriebenen Gestaltung des Systems weist eine Primärleuchte in der seriellen Verschaltung von Primärleuchten bzw. Digitalbus-Abschnitten aufgrund der Kopplung an zwei weitere Primärleuchten, jeweils über einen der beiden Digitalbus-Schnittstellen, zwei direkt benachbarte Primärleuchten auf. Diese werden im Folgenden der Einfachheit halber als benachbarte Primärleuchten bezeichnet. Der Begriff Niedriglichtzustand bezeichnet ein Sensorsignal des Lichtsensors, welches die Erfassung eines Lichtniveaus unterhalb einer vorgegebenen Schwelle angibt.

Die Angabe "veranlassende Primärleuchte" meint die Primärleuchte, an welcher ein Objekterfassungssignal erfasst, d.h. eine Objektbewegung und/oder eine Objektpräsenz erkannt wird und welche daraufhin über seine Steuereinrichtung die Versendung einer Nachricht wie einer Objekterfassungsnachricht an andere Primärleuchte startet, indem diese Nachricht zunächst an seine beiden benachbarten Primärleuchten übermittelt wird. Eine Primärleuchte, welche eine solche Nachricht über eine ihrer DALI-Schnittstellen erhält, wird diese nur über die andere DALI-Schnittstelle zu einer benachbarten Primärleuchte übermitteln. Ferner sei darauf hingewiesen, das zumindest einige der genannten Bauteile der Primärleuchten auch außerhalb eines Gehäuses der Primärleuchte angeordnet sein können, beispielsweise der Objektsensor, die Sensorschnittstelle mit den Sensoren, die beiden Digitalbus-Schnittstellen zur Realisierung der seriellen Verschaltung oder auch die Steuereinrichtung mit den beiden Digitalbus-Schnittstellen.

Die am internen Betriebsgerät einstellbaren Betriebsmodi können beispielsweise ein Aus-Zustand, ein Basisbetrieb, bei welchem das Leuchtmittel bei einem vorgegebenen niedrigen Dimmwert von beispielsweise 20% betrieben wird, sowie ein Nennbetrieb sein, bei welchem das Leuchtmittel bei einem höheren Dimmwert von beispielsweise 50 - 100% betrieben wird.

Um benachbarte Primärleuchten über den Nennbetriebsstatus einer veranlassenden Primärleuchte zu informieren, übermittelt die veranlassende Primärleuchte jeweils periodisch eine Aktiv-Nachricht über ihre zumindest zwei Digitalbus-Schnittstellen an die beiden benachbarten Primärleuchten, solange ein Nennbetriebs-Timer der Nennbetriebs-Zeitschaltung eine geringere Zeitdauer anzeigt, als eine der veranlassenden Primärleuchte zugeordnete, vorbestimmte Nennbetriebs-Haltezeit. Diese Aktiv-Nachricht kann eine vorbestimmte Bitfolge darstellen, welche von den anderen Primärleuchten respektive deren Steuerungseinrichtung erkannt wird. Gleiches gilt für die obenstehend angegebene Objekterfassungsnachricht. Die Weitergabe der von einer Primärleuchte über eine ihrer in der seriellen Verschaltung angeordneten Digitalbus-Schnittstellen erhaltenen Nachricht kann dann über die andere ihrer Digitalbus-Schnittstellen an ihre andere benachbarte Primärleuchte übermittelt werden. Hierzu ist die Steuereinrichtung der zur veranlassenden Primärleuchten benachbarten Primärleuchten ausgebildet, eine, über eine der zumindest zwei Digitalbus-Schnittstellen erhaltene Nachricht, über die jeweils andere der zumindest zwei Digitalbus-Schnittstellen an ihre jeweils andere benachbarte Primärleuchte aus der Mehrzahl der Primärleuchten in Abhängigkeit von vorgegebenen Bedingungen zu übermitteln. Dabei ist die Primärleuchte, an welche über eine ihrer zumindest zwei Digitalbus-Abschnitten die Objekterfassungsnachricht von einer Ihrer beiden benachbarten Primärleuchten übermittelt wird, dazu ausgebildet, diese zu empfangen, und im Ansprechen auf den Empfang der Objekterfassungsnachricht ein über ihre Sensorschnittstelle erfasstes Lichtsensorsignal auf einen Niedriglichtzustand zu überprüfen und einen Betriebsmoduswechsel auf "Nennbetrieb" an ihrem internen Betriebsgerät einzuleiten, wenn ein Niedriglichtzustand vorliegt.

Zweckmäßigerweise kann das erfindungsgemäße Beleuchtungssystem eine Mehrzahl von Sekundärleuchten umfassen, welche jeweils ein Betriebsgerät mit einer Digitalbus-Schnittstelle zum Einstellen von zumindest zwei Betriebsmodi zum Speisen eines Leuchtmittels aufweisen. Zweckmäßigerweise können diese Sekundärleuchten im Unterschied zu den Primärleuchten keine Sensorschnittstelle zum Anschließen eines Objektsensors und/oder eines Lichtsensors aufweisen, sodass der installierte Lichtstrom erhöht werden kann, ohne dass nicht benötigte Sensortechnik installiert ist.

Dabei kann zumindest eine Sekundärleuchte an einem Digitalbus-Abschnitt angeschlossen sein, der zwischen zwei in Bezug auf die serielle Verschaltung benachbarte Primärleuchten verläuft. Beispielsweise kann es zweckmäßig sein, abhängig von den örtlichen Gegebenheiten und der Beleuchtungsaufgabe, eine vorgegebene Anzahl von Sekundärleuchten einer Primärleuchte dadurch zuzuordnen, dass diese Sekundärleuchten respektive deren Betriebsgeräte durch die Steuereinrichtung einer ihrer beiden an den jeweiligen Digitalbus-Abschnitt angeschlossenen Primärleuchten so angesteuert werden, dass der gleiche Betriebsmodus wie der Betriebsmodus des internen Betriebsgerätes an dem bzw. den Sekundärleuchten eingestellt ist.

Um den notwendigen Hardwareaufwand zu minimieren, kann zweckmäßigerweise vorgesehen sein, dass das interne Betriebsgerät einer Primärleuchte zum Speisen eines Leuchtmittels eine Digitalbus-Schnittstelle aufweist, mit dem das interne Betriebsgerät an einen der beiden Digitalbus-Abschnitte angekoppelt ist, über den die Primärleuchte an eine der beiden benachbarten Primärleuchten angeschlossen ist. Wenn diese Digitalbus-Schnittstelle an dem Digitalbus-Abschnitt angeschlossen ist, an welchem auch die der jeweiligen Primärleuchte zugeordneten Sekundärleuchten angeschlossen sind, können zweckmäßigerweise alle angeschlossenen Sekundärleuchten bzw. deren Betriebsgeräte sowie das interne Betriebsgerät der jeweiligen Primärleuchte mit einem einzigen Befehl zum Ändern des Betriebsmodus, beispielsweise zum Ändern des jeweiligen Leuchtzustandes des betriebenen Leuchtmittels angesteuert werden.

In einer anderen Ausführungsform kann jedoch auch vorgesehen sein, die oben stehend beschriebenen Sekundärleuchten, welche jeweils ein Betriebsgerät mit einer Digitalbus-Schnittstelle zur Steuerung aufweisen, an einen weiteren Digitalbus anzuschließen. Der weitere Digitalbus ist in dieser Ausführungsform nicht Teil der beschriebenen Reihenschaltung von Digitalbus-Abschnitten, jedoch auch an die Steuerungseinrichtung einer Primärleuchte angeschlossen. Hierzu kann die Steuerungseinrichtung eine zusätzliche Digitalbus-Schnittstelle aufweisen, an den auch das interne Betriebsgerät mit Digitalbus-Schnittstelle angekoppelt ist. Auf diese Weise wird wiederum eine Leuchtengruppe, bestehend aus der Primärleuchte und einer Anzahl von Sekundärleuchten festgelegt, deren gesamte Leuchtmittel wie für die vorstehend beschriebene Ausführungsform beschrieben, von der Steuerungseinrichtung einer Primärleuchte mit einem einzigen Befehl zum Ändern des Betriebsmodus, insbesondere durch einen Broadcast-Befehl, angesteuert werden können.

In einer weiteren Ausführungsform kann auch vorgesehen sein, die Reihenschaltung der Digitalbus-Abschnitte durch die Verwendung eines sogenannten Powerbusses zwischen den Primärleuchten zur Bereitstellung einer Reihenschaltung von als Digitalbusabschnitt wirkende Powerbusabschnitte zu realisieren. Dieser Powerbus stellt neben der steuerungstechnisch realisierten Reihenschaltung der Primärleuchten auch eine Reihenschaltung der Primärleuchten in versorgungstechnischer Hinsicht bereit, wobei die Primärleuchten in Bezug auf die Versorgungsspannung parallel am Powerbus angeschlossen sein können. Ferner können auch die beschriebenen Sekundärleuchten in versorgungstechnischer und/oder in steuerungstechnischer Hinsicht an den Powerbus angeschlossen sein. Die Steuerungseinrichtung einer Primärleuchte kann jeweils über zwei Powerbus-Schnittstellen mit dem Powerbus verbunden sein, wobei zwischen diesen Schnittstellen eine Bandsperre zur Blockierung der einlaufenden Aufmodulation angeordnet sein kann.

In einer besonderen Ausführungsform kann vorgesehen sein, das das interne Betriebsgerät der jeweiligen Primärleuchte von der jeweiligen Steuereinrichtung über einen DALI-Bus angesteuert wird, wobei an den DALI-Bus ferner zumindest eine objektsensorfreie Sekundärleuchte angeschlossen ist, die auch von der jeweiligen Steuereinrichtung gesteuert und vom Powerbus gespeist wird. In einer hiervon abgewandelten Ausführungsform kann dagegen vorgesehen sein, dass die zumindest eine objektsensorfreie Sekundärleuchte von der Steuereinrichtung der jeweiligen Primärleuchte mittels Steuersignalen angesteuert wird, welche die Steuereinrichtung über eine der beiden Powerbus-Schnittstellen und über einen jeweiligen, als Digitalbusabschnitt wirkenden Powerbusabschnitt zur zumindest einen objektsensorfreien Sekundärleuchte übermittelt.

Zweckmäßigerweise kann vorgesehen sein, dass Primärleuchten einen von deren Steuereinrichtung ansteuerbaren Schalter wie ein MOSFET aufweisen zum Schalten der Stromversorgung des jeweiligen internen Betriebsgerätes. Hierdurch kann das interne Betriebsgerät, beispielsweise ein EVG zur Verminderung der Verlustleistung so lange ausgeschaltet bleiben, wie das jeweilige Leuchtmittel nicht gespeist werden muss. Insofern kann es zweckmäßig sein, wenn zum Einschalten des Nennbetriebs eines internen Betriebsgeräts einer Primärleuchte und der zugeordneten Sekundärleuchte respektive deren Betriebsgeräte zunächst der Schalter für das zumindest eine interne Betriebsgerät der Primärleuchte eingeschaltet wird. Danach, unter Umständen unter Vorsehen einer Verzögerung, kann ein entsprechender Steuerbefehl von der Steuereinrichtung der Primärleuchte an das interne Betriebsgerät und die Betriebsgeräte der zugeordneten Sekundärleuchten gesendet werden, welche alle an einem Digitalbus-Abschnitt angeschlossen sind und insofern gleichzeitig angesteuert werden können. Wie obenstehend erläutert, kann dieser Digitalbus-Abschnitt Teil der Reihenschaltung von Digitalbus-Abschnitten des Beleuchtungssystems sein. Es ist jedoch auch möglich, dass dieser Digitalbus-Abschnitt von der Reihenschaltung getrennt über eine weitere Schnittstelle an die Steuerungseinrichtung einer Primärleuchte angeschlossen ist.

Zur Bereitstellung eines modularen Aufbaus kann es zweckmäßig sein, wenn jede der Primärleuchten eine Erweiterungseinheit umfasst, welche einen Hilfscontroller, die Sensorschnittstelle, eine Luftschnittstelle zum kabellosen Verbinden der Primärleuchte mit einer tragbaren Konfigurations- und/oder Parametrierungseinrichtung wie einem Smartphone oder Tablet sowie einer optisch und/oder akustische Signalisierungseinrichtung aufweist. Dabei kann die angegebene Erweiterungseinheit über einen internen Datenbus mit der Steuerungseinrichtung der Primärleuchte verbunden sein. Die Erweiterungseinheit stellt damit das Anschließen eines Objektsensors sowie eines Lichtsensors zur Verfügung. Je nach spezifischer Konfiguration des erfindungsgemäßen Beleuchtungssystems kann die angegebene Luftschnittstelle wie beispielsweise eine Infrarotschnittstelle oder eine Bluetooth-Schnittstelle ausgebildet sein, um jede einzelne Primärleuchte zu konfigurieren bzw. parametrieren. In einer besonderen Ausgestaltung kann auch vorgesehen sein, dass die Konfigurierung bzw. Parametrierung aller Primärleuchten darüber durchgeführt wird, dass an einer einzelnen Primärleuchte bzw. deren Erweiterungseinheit die jeweiligen Daten in das System eingespeist und nachfolgend über die beschriebene Reihenschaltung der Primärleuchten an alle sukzessiv weitergegeben werden. Eine solche Gestaltung ist insbesondere dann besonders zweckmäßig, wenn die Konfigurations- bzw. Parametrierungsdaten für alle Primärleuchten identisch sind. In diesem Fall können ohne besondere Adressierung die an einer Primärleuchte eingegebenen Konfigurations- oder Parametrisierungsdaten über die beschriebene serielle Verschaltung der Primärleuchten an alle Primärleuchten sukzessive übermittelt werden.

Zweckmäßigerweise sind bei dem herkömmlichen Beleuchtungssystem alle bekannten Digitalbus-Schnittstellen bzw. Digitalbusse als Digitalbus-Abschnitte einsetzbar. Dies gilt insbesondere für die auf dem Gebiet weit verbreiteten DALI (Digital Adressable Lighting Interface)-Schnittstellen bzw. DALI-Busse, insbesondere nach der aktuellen Normreihe IEC 62386. Dabei kann es zweckmäßig sein, die Kommunikation zwischen einer Primärleuchte, respektive deren Steuereinrichtung und der internen Betriebseinrichtung sowie den Betriebseinrichtungen der zugeordneten Sekundärleuchten über herkömmliche 16 Bit-Lichtsteuerungssignale durchzuführen und die auf dem gleichen DALI-Bus kommunizierenden zwei Primärleuchten bzw. deren Steuereinrichtungen als Master-Master-Kommunikation oder als Kommunikation mit einem benutzerspezifischen Protokoll auszuführen, sodass diese Kommunikation von den auch angeschlossenen Betriebsgeräten nicht dekodiert werden können und insofern ignoriert werden. Durch derartige Maßnahmen kann die Kommunikation über den jeweiligen Digitalbus-Abschnitt ohne spezifische Adressierung der einzelnen Busteilnehmer durchgeführt werden. Andererseits liegt es auch im Rahmen der Erfindung, für die innerhalb des Beleuchtungssystems angeordneten Digitalbus-Abschnitte, d.h. DALI-Busse die angeschlossene Busteilnehmer über eine jeweils zugeordnete DALI-Adresse anzusprechen.

Verfahrensseitig wird die obige Aufgabe gelöst durch ein Verfahren zum Betreiben eines Beleuchtungssystems mit den Schritten: Erfassen einer Objektpräsenz über die Sensorschnittstelle der veranlassenden Primärleuchte sowie Übermitteln einer zugeordneten Objekterfassungsnachricht durch die Steuerungseinrichtung der veranlassenden Primärleuchte über ihre mindestens zwei Digitalbusstellen an ihre beiden benachbarten Primärleuchten, wobei die Steuerungseinrichtung nach Erfassen der Objektpräsenz der veranlassenden Primärleuchte folgende Schritte ausführt, wenn über die Sensorschnittstelle der veranlassenden Primärleuchte ein Niedriglichtzustand erfasst wird:
Wechseln des Betriebsmodus auf Nennbetrieb zum Betrieb des Leuchtmittels und Starten der Nennbetriebs-Zeitschaltung, wobei die Steuereinrichtung der veranlassenden Primärleuchte weiter die folgenden Schritte ausführt: periodisches Übermitteln einer Aktiv-Nachricht an die zwei Digital-Schnittstellen der beiden zu der veranlassenden Primärleuchte benachbarten Primärleuchten, solange die gemessene Nennbetriebszeit kleiner als die vorgegebene Nennbetriebs-Haltezeit ist, wobei jedes der internen Betriebsgeräte der zu der veranlassenden Primärleuchte benachbarten Primärleuchten die folgenden Schritte ausführt: Verbleiben im Nennbetrieb oder Ansteuern des Nennbetriebs bei Erhalt einer der Nachrichten sowie das Weiterleiten der Nachrichten in Abhängigkeit von vorgegebenen Bedingungen an die jeweils andere benachbarte Primärleuchte. Dabei überprüft die Primärleuchte, welche über eine ihrer zumindest zwei Digitalbus-Abschnitten die Objekterfassungsnachricht von einer Ihrer beiden benachbarten Primärleuchten empfängt, im Ansprechen auf den Empfang der Objekterfassungsnachricht ein über ihre Sensorschnittstelle erfasstes Lichtsensorsignal auf einen Niedriglichtzustand und leitet einen Betriebsmodus-wechsel auf "Nennbetrieb" an dem internen Betriebsgerät ein, wenn ein Niedriglichtzustand vorliegt.

Je nach Ausführungsform kann das Verfahren die Übermittlung einer Nachricht wie eine Objekterfassungsnachricht oder eine Aktiv-Nachricht an alle Primärleuchten umfassen, wobei diese Übermittlung dann sukzessiv über die verketteten DALI-Busse verläuft.

Darüber hinaus kann es auch zweckmäßig sein, wenn die veranlassende Primärleuchte, welche die jeweilige Nachricht in beide Richtungen der seriellen Verschaltung übermittelt, in den jeweiligen Nachrichten eine Reichweite-Information, beispielsweise in Form eines Ausgangszählwertes niederlegt. Dieser Wert kann vor der Weitergabe von den empfangenden Primärleuchten jeweils in der Nachricht erniedrigt werden, wobei die Weiterleitung der Nachricht gestoppt wird, wenn der Zählwert einen vorgegebenen Wert erreicht. Auf diese Weise kann die veranlassende Primärleuchte festlegen, ob die Nachricht beispielsweise nur bis zum ersten, d.h. direkten Nachbarn oder auch an weitere, beispielsweise bis zum übernächsten oder dritten Nachbarn weitergereicht werden soll. Hierdurch kann eine Kopplung von Primärleuchten zu einem Leuchtenverbund ohne großen administrativen Aufwand durchgeführt werden.

In einer besonderen Ausführungsform kann auch vorgesehen sein, dass die von der veranlassenden Primärleuchte an ihre direkten Nachbarn übermittelte Nachrichten, insbesondere die Objekterfassungsnachricht oder die Aktiv-Nachricht identisch sind, was den administrativen Aufwand für das erfindungsgemäße Verfahren weiter reduziert.

Andererseits ist es auch möglich, mehrere unterschiedliche Nachrichten, insbesondere mehr als zwei unterschiedliche Nachrichten zwischen den Primärleuchten wie beschrieben zu übermitteln, sodass die austauschbare Information zunimmt, was eine flexiblere Steuerung ermöglicht. Dies kann jedoch die Komplexität des Systems erhöhen.

Um den Datenverkehr auf den seriell verschalteten Digital-bussen zu vermindern, kann es zweckmäßig sein, wenn eine, insbesondere jede Primärleuchte die von ihr empfangenen Nachrichten, welche in die gleiche Richtung in der Reihenschaltung weitergesendet werden sollen, oder eine empfangene Nachricht mit einer von dieser Primärleuchte veranlassten Nachricht synchronisiert, d.h. zumindest zwei Nachrichten als einzelne Nachricht weiterleitet. Diese Möglichkeit ergibt sich insbesondere dadurch, dass das erfindungsgemäße Verfahren mit wenigen, identischen Nachrichten, d.h. Telegrammen auskommt.

Die Erfindung wird im Folgenden durch das Beschreiben einiger Ausführungsformen unter Bezugnahme auf die beiliegenden Figuren erläutert, wobei
- Fig. 1: in einer Prinzipskizze ein erfindungsgemäß ausgebildetes Beleuchtungssystem,
- Fig.2: einen typischen Zeitverlauf von Steuerungssequenzen bei dem in Figur 1 gezeigten Beleuchtungssystem, und
- Fig. 3: in einer Prinzipskizze eine weitere Ausführungsform eines erfindungsgemäß ausgebildetes Beleuchtungssystem
zeigt.

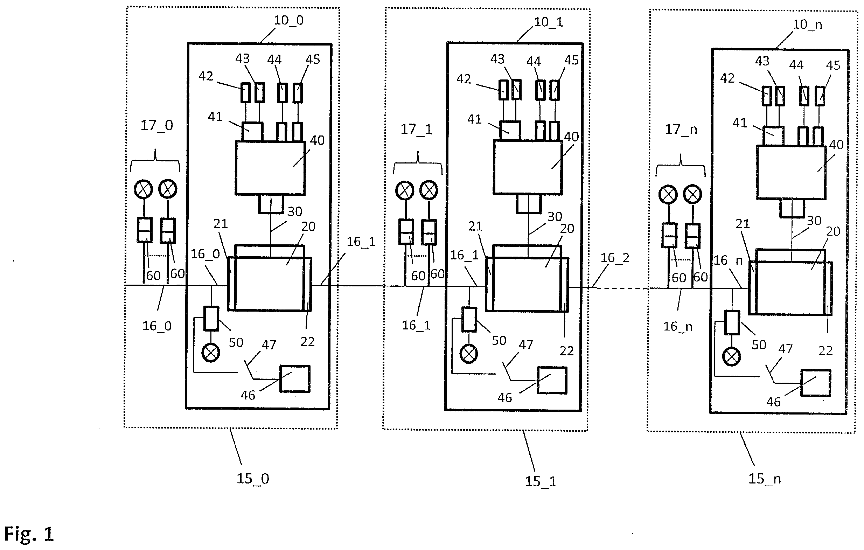

Figur 1 zeigt in einer Prinzipskizze ein erfindungsgemäß ausgebildetes Beleuchtungssystem, bei welchem eine Mehrzahl von Primärleuchten 10_0 bis 10_N umfasst sind, wie es beispielsweise in Tiefgaragen, Lagerhallen etc. einsetzbar ist. In der beschriebenen Ausführungsform erfasst eine einzelne dieser Primärleuchten eine Steuereinrichtung, welche sich hier zusammensetzt aus einem Hauptcontroller 20 und einem Hilfscontroller 40. Der Hauptcontroller 20 ist über zwei DALI-Schnittstellen 21, 22 mit zwei DALI-Bussen 16_1 und 16_2 verbunden und kann insofern mit den Busteilnehmern kommunizieren, welche an die beiden DALI-Busse 16_1, 16_2 angeschlossen sind.

Die beiden Controller 20, 40 sind über einen internen Controllerbus 30 miteinander gekoppelt, wobei der Hilfscontroller über entsprechende Schnittstellen an verschiedenen Eingabe-Ausgabeeinrichtungen angeschlossen ist. Dies betrifft einerseits über eine Sensorschnittstelle 41 die Ankopplung eines Lichtsensors 42, welcher das Umgebungslicht der jeweiligen Primärleuchte erfasst sowie einen Objektsensor 43 zur Bewegungs- oder Präsenzerfassung von sich bewegenden Objekten wie Personen oder Fahrzeugen. In der dargestellten Ausführungsform wird über den Hilfscontroller 40 ein Infrarot-Transceiver 44 angesteuert, mit welchem beispielsweise eine drahtlose Kommunikation mit einem Handgerät zur Konfiguration und/oder Parametrisierung des Beleuchtungssystems bzw. einer Primärleuchte durchgeführt werden kann. Die Schnittstelle 44 kann auch jede andere Luftschnittstelle umfassen, beispielsweise eine WLAN- oder Bluetooth-Schnittstelle. Um insbesondere bei der Durchführung einer solchen Konfiguration bzw. Parametrisierung dem Benutzer eine einfache Rückmeldung zu geben, steuert der Hilfscontroller 40 eine optische Signalisierungseinrichtung 45, welche im einfachsten Fall als LED ausgebildet sein kann.

Je nach Ausführungsform kann die gesamte Steuerungseinrichtung einer Primärleuchte auch als einzelner Controller angeschlossen sein, sodass auch die beschriebenen Sensorschnittstellen bzw. Kommunikationsschnittstellen direkt an den einen Controller gebildet sind. Darüber hinaus sei darauf hingewiesen, dass die Anordnung des Lichtsensors bzw. des Objektsensors nicht in jedem Fall innerhalb des Gehäuses der Primärleuchte realisiert sein muss, sondern diese stattdessen auch außerhalb des Primärlampengehäuses angebracht sein können.

Eine Primärleuchte 10_0 bis 10_N umfasst zumindest ein einzelnes Leuchtmittel bzw. Lampe, welche durch ein Betriebsgerät in Form eines EVGs (Elektronisches Vorschaltgerät) mit integrierter DALI-Schnittstelle gespeist bzw. angesteuert wird. Dieses interne DALI-EVG 50 ist an den DALI-Bus 16_1 angeschlossen, sodass der Hauptcontroller 20 über die DALI-Schnittstelle 21 das interne DALI-EVG 50 ansteuert. In einer Grundkonfiguration kann die Lampe in einem Nennbetrieb mit vorgegebenem Dimmpegel, beispielsweise 100%, in einem Basisbetrieb mit einem zum Nennbetrieb verminderten Dimmpegel betrieben und ausgeschaltet sein. Um im Ruhezustand des Beleuchtungssystems den Energieverbrauch des Systems zu minimieren, kann der Hauptcontroller 20 einen Schalter 47 ansteuern, über den das Netz von dem internen EVG 50 getrennt werden kann. In der Figur ist die Versorgung 46 nur angedeutet, sie stellt neben den Netzanschlüssen auch die notwendigen Versorgungsspannungen für die beschriebenen elektronischen Einrichtungen wie die beiden Controller und die Schnittstellen der jeweiligen Primärleuchte bereit.

Die Steuereinrichtung 20 weist einen internen Speicher auf oder kann auf einen Speicher zugreifen, in welchem eine Vielzahl von Parametrisierungsdaten zum Betrieb der Leuchte bzw. des Beleuchtungssystems abgelegt sind. Grundsätzlich ist jede Primärleuchte eingerichtet, bei einer Bewegungs- oder Präsenzerfassung eines Objektes über die eigene Sensorschnittstelle 41 und in Abhängigkeit des vom eigenen Lichtsensor 43 ermittelten Umgebungslichtes das an das eigene interne DALI-EVG 50 angeschlossene Leuchtmittel wie eine LED-Einrichtung zu betreiben.

Nachdem eine Objektbewegung bzw. Objektpräsenz über die eigene Sensorschnittstelle 41 erfasst, d.h. erkannt wurde und wenn das Umgebungslicht eine vorgegebene Schwelle unterschreitet, wird das interne DALI-EVG 50 für eine vorgegebene Zeitdauer, welche im Folgenden als Nennbetrieb-Haltezeit bezeichnet wird, betrieben.

Insbesondere diese Nennbetrieb-Haltezeit als auch die Umgebungslichtschwelle, bei welcher ein Einschalten des Nennbetriebs erfolgt, können je nach Ausführungsform spezifisch und individuell für jede Primärleuchte eingestellt werden. Gleiches gilt für den Dimmgrad zur Festlegung des Nennbetriebs, den Dimmgrad zur Festlegung des Basisbetriebs sowie für die Basisbetrieb-Haltezeit. Der Basisbetrieb mit vermindertem Dimmpegel schließt sich in der Regel an den Nennbetrieb an, um nach Beendigung des Nennbetriebs zumindest eine vorgegebene Zeitdauer noch eine Beleuchtung mit verminderter Beleuchtungsstärke bereitzustellen. Je nach Anwendungsfall, beispielsweise in Tiefgaragen, welche vollständig auf künstliche Beleuchtung angewiesen sind, kann es zweckmäßig sein, die Primärleuchten zu keiner Zeit vollständig auszuschalten, insofern verbleiben diese dann im Ruhezustand des Systems im Basisbetrieb. Mit der Speicherung der angegebenen Parameter kann für jede Primärleuchte 10_0 bis 10_N und abhängig von den jeweiligen spezifischen örtlichen Gegebenheiten die Beleuchtung im Bereich der jeweiligen Primärleuchte eingestellt werden, wobei zumindest ein Teil der angegebenen Parameter individuell für die jeweilige Primärleuchte festgesetzt werden kann.

Jede der Primärleuchten 10_0 bis 10_N umfasst zumindest eine in Fig. 1 nicht dargestellte Zeitschaltung, beispielsweise in Form eines steuerbaren Zählers, welcher im Controller 20 integriert sein kann. Ein solcher Zähler wird von der Steuereinrichtung für die Ermittlung der aktuellen Nennbetriebszeit bzw. Basisbetriebszeit verwendet, welche dann mit der vorbestimmten und gespeicherten Nennbetriebs-Haltezeit bzw. Basisbetriebs-Haltezeit verglichen wird.

Einer einzelnen Primärleuchte 10_0 bis 10_N können weitere externe Leuchten direkt zugeordnet werden, welche von der jeweiligen Primärleuchte in gleicher bzw. ähnlicher Weise wie die interne Lampe angesteuert werden, wobei die jeweilige Primärleuchte zusammen mit den zugeordneten externen Leuchten einen Leuchtenverbund 15_0 bis 15_n bildet. In der in Figur 1 angegebenen Anordnung sind die der Primärleuchte 10_1 zugeordneten externen oder Sekundärleuchten mit dem Bezugszeichen 17_1 gekennzeichnet. Sowohl die Anzahl als auch die Anordnung dieser externen Leuchten kann spezifisch an das jeweilige Beleuchtungsproblem ausgewählt bzw. angepasst werden. Diese externen Leuchten sind über entsprechende DALI-EVGs 60 an den DALI-Bus 16_1 angeschlossen, an dem auch das interne DALI-EVG angekoppelt ist, sodass der Controller 20 der Primärleuchte 10_1 über den gleichen Befehl sowohl das interne als auch die externen Leuchtmittel des Leuchtenverbundes 15_1 ansteuern kann. Hierzu kann der Befehl als Broadcast-Befehl vom Controller 20 auf den DALI-Bus 16_1 gesendet werden.

Die beiden DALI-Schnittstellen 21, 22 der jeweiligen Primärleuchten unterscheiden sich in der beschriebenen Ausführungsform dadurch, dass die DALI-Schnittstelle 21 auch zum Bereitstellen der DALI-Versorgung ausgebildet ist. Ferner wird bei allen Primärleuchten allein die DALI-Schnittstelle 21 genutzt, um direkte Lichtsteuerungsbefehle wie Dimmbefehle abzusetzen, nicht jedoch die zweite DALI-Schnittstelle des jeweiligen Controllers 20.

Nachdem nun die spezifische Gestaltung des erfindungsgemäß ausgebildeten Beleuchtungssystems in der beschriebenen Ausführungsform und deren Konfiguration beschrieben wurde, wird im Folgenden die Kopplung der einzelnen Primärleuchten 10_0 bis 10_N bzw. der Leuchtengruppen 15_0 bis 15_N erläutert.

Wie sich aus Figur 1 ergibt, sind bei dem erfindungsgemäßen Beleuchtungssystem alle Primärleuchten 10_0 bis 10_N steuerungstechnisch, d.h. über Steuerungsleitungen in Form von Digitalbus-Abschnitten, hier DALI-Busse seriell verschaltet, wobei zwischen diesen DALI-Bussen jeweils eine Steuereinrichtung einer Primärleuchte angeordnet ist. In dieser Hinsicht weisen mit Ausnahme der Endglieder 10_0 und 10_N alle Primärleuchten zwei direkte Nachbar-Primärleuchten auf, welche sich dadurch auszeichnen, dass sie an dem gleichen DALI-Bus angeschlossen sind. In dieser Hinsicht weist die Primärleuchte 10_1 zwei direkte Nachbarn 10_0 und 10_2 (nicht dargestellt) auf, mit denen sie über grundsätzlich unabhängige DALI-Busse 16_1 bzw. 16_2 mittels ihrer zugeordneten DALI-Schnittstelle 21, 22 verbunden ist.

In der beschriebenen Ausführungsform erfolgt die Kommunikation zwischen den beiden Hauptcontrollern 20 zweier benachbarter Primärleuchten, beispielsweise den Primärleuchten 10_0 und 10_1 mittels Nachrichten bzw. Telegrammen auf der Basis eines Protokolls, welches von den auch am DALI-Bus, 16_1 angeschlossenen Sekundärleuchten 17_1 nicht dekodierbar sind und damit verworfen werden. Auf diese Weise können zwischen den beiden Primärleuchten, respektive deren Hauptcontrollern 20, Broadcast-Nachrichten ausgetauscht werden, was die Konfiguration und den Betrieb des Systems stark vereinfacht.

Dies gilt in gleicher Weise für die Kommunikation zwischen einer Primärleuchte und ihren zugeordneten Sekundärleuchten. Auch hier können Broadcast-Befehle versendet werden, da alle an einem DALI-Bus angeschlossenen Betriebsgeräte respektive Leuchtmittel wie obenstehend beschrieben in gleicher Weise betrieben und damit mit einem einzelnen Befehl gesteuert werden. In der angegebenen Ausführungsform können beispielsweise bei der Kommunikation zwischen den Schnittstellen 21, 22 die Hauptcontroller 20 der beiden Leuchten 10_1 und 10_0 24Bit-Telegramme verwendet werden, während für die Steuerung der DALI-EVGs 50, 60 übliche 16 Bit-Telegramme zur Lichtsteuerung eingesetzt werden, die aufgrund des beschriebenen Aufbaus des Systems auch ohne Adressierung über den Bus übermittelt und von den Teilnehmern dekodiert werden können. Derartige direkte Lichtsteuerungsbefehle über die DALI-Schnittstelle 21 werden an der Schnittstelle 22 der anderen Steuereinrichtung 20 einfacherweise ignoriert.

In einer nicht dargestellten Ausführungsform der Erfindung ist es natürlich auch möglich, die Kommunikation auf den jeweiligen Digital Busabschnitten, d.h. den jeweiligen DALI-Bussen 16_1 bis 16_N unter Angabe einer spezifischen Adresse durchzuführen.

In einer weiteren nicht dargestellten Ausführungsform der Erfindung ist es auch möglich, dass sowohl die veranlassende Primärleuchte als auch die die Objekterfassungsnachricht empfangenden Primärleuchten in Reaktion auf das erfasste Objektsignal bzw. in Reaktion auf den Empfang einer Objekterfassungsnachricht direkt (im Wesentlichen verzögerungsfrei) den jeweiligen Nennbetrieb starten, soweit ein jeweiliger Niedriglichtzustand an der jeweiligen Primärleuchte erkannt wird. Auch in dieser Ausführungsform startet nur die veranlassende Primärleuchte ihre Nennbetriebszeitmessung und sendet wie vorstehend erläutert "Aktiv"-Nachrichten solange die jeweilige Nennbetriebshaltezeit noch nicht abgelaufen ist.

Aufgrund der beschriebenen Verkettung der einzelnen Primärleuchten zum Gesamtbeleuchtungssystem kann eine einfache und intelligente Lichtsteuerung des Gesamtsystems ohne zentrale Steuerung bereitgestellt werden, da durch die, in Bezug auf die steuerungstechnische, d.h. in Bezug auf die Steuerleitung serielle Verkopplung der Primärleuchten, der Informationsfluss zwischen den einzelnen Leuchten eindeutig vorgegeben ist und mit Ausnahme der Endglieder 10_0 und 10_N jede Leuchte respektive deren Hauptcontroller 20 die von einer seiner benachbarten Primärleuchten empfangene Information aufnimmt, für die eigene Beleuchtungssteuerung, d.h. zur Steuerung seiner DALI-Betriebsgeräte 50, 60 unter Berücksichtigung seiner Sensoreingänge verwendet und in Abhängigkeit vorgegebener Regeln empfangene Nachrichten an seiner anderen DALI-Schnittstelle an die zweite benachbarte Primärleuchte weitergibt. Dabei können Nachrichten je nach Anwendungsfall und/oder Betriebssituation entweder unbedingt weitergegeben, abgeändert oder die Weitergabe an den nächsten Nachbarn unterdrückt werden.

Aufgrund der beschriebenen Anordnung der Primärleuchten kann die Gesamtsteuerung des Systems mit einer gegenüber herkömmlichen Systemen sehr reduzierten Anzahl von Befehlen bzw. Nachrichten durchgeführt werden. Darüber hinaus kann aufgrund der seriellen Strukturierung der Nachrichtenverkehr zur Steuerung des gesamten Beleuchtungssystems vergleichsweise gering gehalten werden.

Im Folgenden soll zunächst das grundsätzliche Verfahren zum Betrieb eines solchen Beleuchtungssystems erläutert werden. Dabei sei zunächst davon ausgegangen, dass das gesamte System ausgeschaltet ist, d.h. dass alle Lampen im Aus-Zustand sind, jedoch die Lichtsensoren 42 und Objektsensoren 43 aller Primärleuchten 10_0 bis 10_N aktiv sind. Ereignet sich nun beispielsweise an der Primärleuchte 10_1 eine Bewegungs- oder Präsenzerfassung, erfolgt bedingungslos die Übermittlung einer entsprechenden Objekterfassungsnachricht über beide DALI-Schnittstellen 21, 22 an die direkt benachbarten Primärleuchten 10_0 und 10_2 über die jeweiligen DALI-Busse 10_1 und 10_2. Wenn der Lichtsensor der die Bewegung erfassenden Primärleuchte 10_1 einen Niedriglichtzustand erkennt, wird der Schalter 47 der Primärleuchte 10_1 zum Schließen angesteuert, sodass das interne EVG 50 zum Betrieb der zugeordneten Lampe vorbereitet ist. Wird kein Niedriglichtzustand erkannt, wird der Schalter 47 nicht geschlossen, da eine Einschaltung aufgrund des hohen Umgebungslichtanteils unterbleiben kann. In der beschriebenen Ausführungsform benötigt das DALI-EVG 50 etwa 0,5 sec bis es zum Empfang von Lichtsteuerungssignalen bereit ist.

In Reaktion auf den Empfang der von der Primärleuchte 10_1 abgesendeten Objekterfassungsnachricht durch die Primärleuchten 10_0 und 10_2 wird auch in diesen Leuchten überprüft, ob ein Niedriglichtzustand vorliegt. Bejahendenfalls wird der Schalter 47 zum Schließen angesteuert, sodass das interne EVG 50 nach weiteren 0,5 sec zum Betrieb der zugeordneten Lampe vorbereitet ist. In der beschriebenen Ausführungsform wird der Betrieb des internen Betriebsgerätes und zugeordneten Betriebsgeräte der Primärleuchten 10_0 und 10_2 noch nicht gestartet, sondern auf eine weitere Nachricht von der veranlassenden Primärleuchte 10_1 gewartet. Wird kein Niedriglichtzustand erkannt, wird der Schalter 47 nicht geschlossen, da eine Einschaltung der jeweiligen Leuchte aufgrund des hohen Umgebungslichtanteils unterbleiben kann.

Die veranlassende Leuchte 10_1 beginnt nach Ablauf einer kurzen Zeit von beispielsweise 1 Sekunde, nachdem sie ihren Schalter 47 zum Schließen angesteuert hat, die Einstellung des Nennbetriebs. Zusammen mit einem Broadcast-Befehl zur Einstellung des Nennbetriebs für das interne Betriebsgerät 50 und die externen Betriebsgeräte 60, den der Hauptcontroller 20 über seine Schnittstelle 21 über den DALI-Bus 16_1 übermittelt, startet der Controller 20 einen Zähler zur Ermittlung der Nennbetriebszeit, welche nachfolgend mit der voreingestellten und abgespeicherten Nennbetriebs-Haltezeit regelmäßig verglichen wird.

Mit dem Start des Zählers sendet der Hauptcontroller 20 über seine beiden DALI-Schnittstellen 21, 22 an den Controller 20 der beiden benachbarten Primärleuchten 10_0 und 10_2 so lange periodisch, d.h. in regelmäßigen Abständen eine Aktivnachricht, welche den beiden Nachbarn anzeigt, dass ein Nennbetrieb eingestellt ist. In Reaktion auf den Empfang einer ersten Aktiv-Nachricht starten die zur veranlassenden Primärleuchte 10_1 benachbarten Primärleuchten 10_0 und 10_2 durch Übermittlung eines entsprechenden Befehls an die ihnen zugeordneten Betriebsgeräte über den zugeordneten DALI-Bus 16_0 bzw. 16_2 zum Betreiben der Lampen im Nennbetrieb.

In der beschriebenen Ausführungsform starten die beiden direkten Nachbarn der veranlassenden Primärleuchte 10_1 ihre jeweiligen Zeitschaltungen zur Erfassung des Nennbetriebs nicht. Stattdessen erfolgt eine Auslösung dieser Schaltung in diesen Primärleuchten allein bei einer Bewegungs- oder Präsenzerfassung über den eigenen Objektsensor 43. Soweit die beiden benachbarten Primärleuchten 10_0 und 10_2 keine Bewegungs- bzw. Präsenzerfassung an ihren jeweiligen Sensoren erkennen, wird der Nennbetrieb nur eine vorgegebene Zeitdauer angestoßen bzw. beibehalten durch die einlaufenden Aktiv-Nachrichten, wobei diese Zeitdauer wesentlich länger ist (z.B. um einen Faktor größer 2 und beispielhaft kleiner 10) als die Intervalle zwischen den Aktiv-Nachrichten der veranlassenden Primärleuchte 10_1, welche etwa im 10-Sekundenbereich liegen können.

Erfolgt an einer der benachbarten Primärleuchten 10_0 bzw. 10_2 nachfolgend auch eine Bewegungs- oder Präsenzerfassung, bleibt diese Primärleuchte in ihrem Nennbetriebszustand, übermittelt zunächst die mit Bezug auf die Leuchte 10_1 beschriebene Objektnachricht an beide Nachbarleuchten, startet ihren eigenen Nennbetriebs-Timer und sendet über die eigene Nennbetriebs-Haltezeit in vorgegebenen Intervallen nun selbst periodisch Aktiv-Nachrichten über beide an die DALI-Schnittstellen 21, 22 angeschlossenen DALI-Busse an seine beiden Nachbar-Primärleuchten.

Der weitere Ablauf des Verfahrens kann sich je nach spezifischer Ausführung unterscheiden. Zunächst soll eine Ausführungsform betrachtet werden, bei welcher grundsätzlich die in einer Primärleuchte an seine beiden Nachbarn, respektive Controller 20 übermittelten Nachrichten an seine übernächsten Nachbarleuchten weitergegeben wird usw., sodass eine derartige Nachricht grundsätzlich über die gesamte lineare Kette von DALI-Bussen propagiert. Die beschriebene Objekterfassungsnachricht kann in dieser Ausführungsform bedingungslos von allen Controllern an den jeweilig anderen Nachbarn weitergegeben werden. Zurückkommend auf das oben zum Verfahren beschriebene bedeutet dies, dass alle Primärleuchten 10_0 und 10_2 bis 10_N die Objekterfassungsnachricht und nachfolgende Aktiv-Nachrichten erhalten haben und demnach in Abhängigkeit eines eventuell über ihren jeweiligen Lichtsensor erfassten Niedriglichtzustandes in den Nennbetrieb übergegangen sind, ohne - wie obenstehend erläutert - ihre eigene Zeitschaltung zur Ermittlung der aktuellen Nennbetriebszeit zu starten. Das bedeutet, dass bei einer Primärleuchte, welche eine größere Nennbetriebs-Haltezeit aufweist, wie die veranlassende Primärleuchte, der Nennbetrieb an den "angestoßenen Primärleuchten" zusammen mit dem der veranlassenden Primärleuchte ausgeschaltet wird, wenn nicht vorher an der "angestoßenen Leuchte" eine Bewegung erfasst wurde oder von einer anderen Primärleuchte eine Aktiv-Nachricht periodisch, über die Haltezeit der ersten veranlassenden Primärleuchte hinaus, übermittelt wird. Dabei setzt jede eigene neue Bewegungs- oder Präsenzerfassung an einer veranlassenden Primärleuchte den Nennbetriebs-Timer dieser Leuchte zurück.

Erkennbar können bei dieser beschriebenen Ausführungsform des Verfahrens auf der seriellen Verschaltung von DALI-Bussen eine Vielzahl von Aktiv-Nachrichten und Objekterfassungsnachrichten gleichzeitig propagieren. Dieser Nachrichtenverkehr auf den seriell verschalteten DALI-Bussen kann jedoch mit der Erfindung drastisch reduziert werden, da insbesondere weiterzuleitende Aktiv-Nachrichten von einer Primärleuchte herausgefiltert werden können, wenn diese selbst etwa zeitgleich ein Aktivsignal in die gleiche Richtung, d.h. über die gleiche DALI-Schnittstelle an den gleichen Nachbarn versenden soll oder kurz hintereinander mehrere Aktiv-Nachrichten über denselben DALI-Bus erhält. Diese "Herausfilterung" von Busnachrichten entspricht einer Art Synchronisation der Nachrichten auf den seriell verketteten Digital-Bussen. Die Zeit, welche ein jeweiliger Controller 20 wartet, um derartige Aktiv-Nachrichten zu sammeln, kann anwenderspezifisch und abhängig von dem notwendigen Antwortverhalten der gesamten Vorrichtung eingestellt werden. Besonders zweckmäßig kann es sein, diese Wartezeit etwa gleich dem Zeitintervall zwischen zweier von der veranlassenden Primärleuchte abgegebenen Aktiv-Nachrichten zu setzen. Grundsätzlich kann es zweckmäßig sein, dieses Zeitintervall für die Steuereinrichtungen bzw. Controller 20 aller Primärleuchten auf denselben Wert zu setzen.

Im Ergebnis können auf der seriellen Verschaltung propagierende Aktiv-Nachrichten und/oder Objekterfassungsnachrichten an jeder Primärleuchte respektive deren Steuereinrichtung zusammengefasst, d.h. synchronisiert werden, wodurch der Datenverkehr über die Digitalbus-Abschnitte stark vermindert wird. Sollte eine Kollision von Nachrichten auf einem Digitalbusabschnitt erkannt werden, erfolgt eine Neusendung.

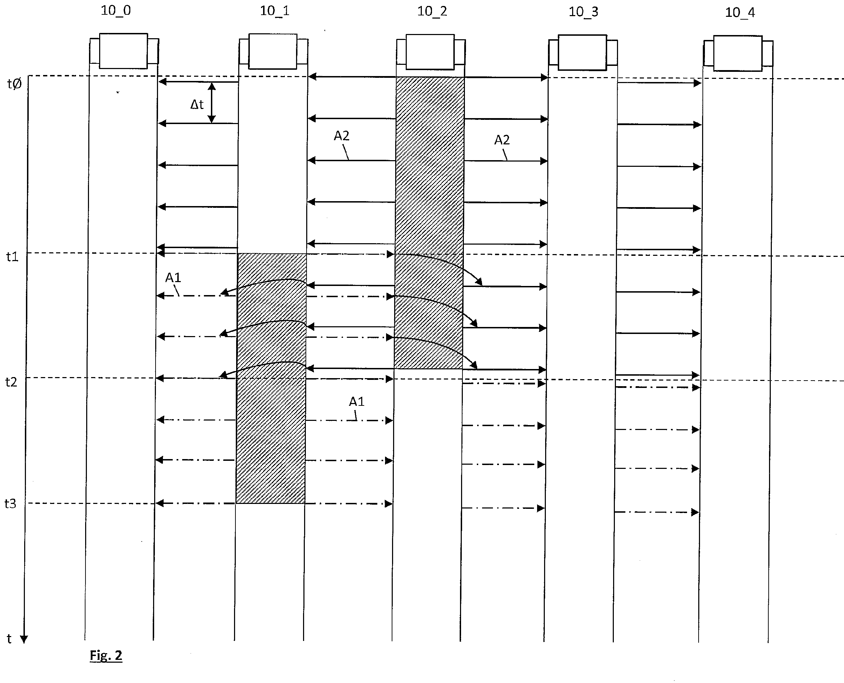

Eine beispielhafte Steuersequenz bzw. Nachrichtensequenz zeigt die Figur 2 für eine oben beschriebene Ausführungsform, bei welcher grundsätzlich die von einer veranlassenden Primärleuchte abgesendeten Nachrichten wie die Objekterfassungsnachricht oder die Aktiv-Nachricht über die gesamte Reihenschaltung von DALI-Bussen propagieren, d.h. sukzessiv an alle Primärleuchten weitergegeben werden. Der Einfachheit halber sind in der Figur nur fünf Primärleuchten dargestellt, welche mit den Bezugszeichen 10_0 bis 10_5 bezeichnet sind. In vertikaler Richtung ist ein Zeitstrahl t angegeben, bei welchem die Zeiten t0, t1, t2 und t3 gekennzeichnet sind. Zur Klarheit der Darstellung wurde auf die Darstellung der Übersendung von Objekterfassungsnachrichten verzichtet, hier kann auf die obige Beschreibung verwiesen werden. In der Figur gezeigt ist insofern allein die Übermittlung von Aktiv-Nachrichten, welche in der Figur als horizontale Pfeile dargestellt sind und mit dem Bezugszeichen A1 bzw. S2 gekennzeichnet sind.

Die Fig. 2 startet mit einer Situation, bei welchem das Anlaufverfahren zum Starten des Nennbetriebs der Primärleuchten in Reaktion auf das Erkennen einer Bewegung an der Primärleuchte 10_2 abgeschlossen ist. Zum Zeitpunkt t0 versendet die veranlassende Primärleuchte 10_2 zum ersten Mal eine Aktivnachricht an ihre beiden direkten Nachbarn 10_1 und 10_3, nachdem sie selbst ihre Betriebsgeräte zur Einstellung des Nennbetriebs angesteuert und ihre Zeitschaltung zur Erfassung ihrer Nennbetriebszeit gestartet hat. Die Nachricht wird zu allen Primärleuchten respektive deren Steuergeräten weitergegeben. In der Figur ist die Nennbetriebshaltezeit schraffiert für die Leuchte 10_2 angegeben, insofern wird die Primärleuchte 10_2 ihren Nennbetrieb etwas vor dem Zeitpunkt t2 beenden, soweit diese Leuchte keine Nachrichten von anderen Leuchten erhält. Der zeitliche Abstand zwischen zweier Aktiv-Nachrichten beträgt Δt.

Zum Zeitpunkt t1 erfolgt die erste Versendung einer Aktiv-Nachricht von der Primärleuchte 10_1, nachdem diese über ihren Objektsensor ein Objekt erfasst hat, eine Objekterfassungsnachricht an ihre Nachbarn weitergegeben hat und ihre Zeitschaltung gestartet hat. Ab diesem Zeitpunkt senden sowohl die Primärleuchte 10_1 und 10_2 Aktiv-Nachrichten, wodurch alle Leuchten weiter im Nennbetrieb verbleiben. Wie aus der Figur hervorgeht, synchronisiert der Controller 20 der Leuchte 10_2 die von der Leuchte 10_1 einlaufenden Aktiv-Nachrichten A1 mit ihren Aktiv-Nachrichten A2, sodass nun der Datenverkehr zur Leuchte 10_3 vermindert wird. Gleiches gilt für den Datenverkehr von der Leuchte 10_1 zur Leuchte 10_0.

Zum Zeitpunkt t3 läuft die Nennbetriebshaltezeit der Leuchte 10_1 aus. Da keine weitere Bewegung erkannt wird und keine weitere Absendung von Aktiv-Nachrichten erfolgt, werden alles Betriebsgeräte des gesamten Beleuchtungssystems von ihren jeweiligen Controllern 20 zum Ausschalten oder Einstellen eines Basisbetriebes angesteuert.

In den zweiten Variante des erfindungsgemäßen Verfahrens zur Steuerung des in Figur 1 angegebenen Beleuchtungssystems ist der Ablauf grundsätzlich wie der zuvor beschriebene mit dem einzigen Unterschied, dass sowohl die Objekterfassungsnachricht als auch die Aktiv-Nachricht nicht über die gesamte lineare Kette der Primärleuchten propagiert wird, sondern nur über eine vorgegebene Anzahl von Nachbarn, beispielsweise in beide Richtungen bis zum übernächsten Nachbarn, in einer anderen Ausführungsform bis zum dritten Nachbarn. Zu diesem Zweck weisen sowohl die Objekterfassungsnachricht als auch die Aktiv-Nachricht einen vorgegebenen, den zu propagierenden Bereich angebenden Zählwert auf, der von der weiterreichenden Primärleuchte respektive deren Controller erniedrigt wird, sodass die Übertragung auf der seriellen Verschaltung endet, wenn der Zählerwert auf einen vorgegebenen Wert, beispielsweise Null heruntergezählt wurde. Besonders zweckmäßig kann es dabei sein, wenn der jeweilige Zählwert Primärleuchten-spezifisch, beispielsweise abhängig von den jeweiligen örtlichen Gegebenheiten an der jeweiligen Primärleuchte eingestellt ist, sodass mit diesem Zählwert für jede der Primärleuchten innerhalb der Kette festgelegt werden kann, wie weit die beiden angegebenen Nachrichten in der Kette propagieren. In diesem Sinne wird von jeder veranlassenden Primärleuchte der Ausgangszählwert festgelegt oder bestimmt, welcher dann von den jeweiligen Nachbarn (d.h. nächsten Nachbarn, übernächsten Nachbarn, etc.) heruntergezählt wird zur Festlegung der Reichweite der jeweiligen Nachricht.

Es sei darauf hingewiesen, dass sowohl die Objekterfassungsnachricht als auch die Aktiv-Nachricht, welche beide von den Primärleuchten über die Reihenschaltung von DALI-Bussen propagiert werden, grundsätzlich keine Informationen über den Absender, d.h. die veranlassende Primärleuchte aufweisen müssen. Einzig bei der Ausführungsform, bei welcher ein die Reichweite festlegender Zählwert im Rahmen der Nachricht übermittelt wird, wird dieser Zählwert durch die veranlassende Primärleuchte festgelegt. In einer weiteren Ausführungsform sind die jeweiligen Zählwerte aller Primärleuchten identisch, sodass in diesem Fall tatsächlich die Objekterfassungsnachricht sowie die Aktiv-Nachricht keinerlei Informationen über die veranlassende Primärleuchte aufweist, obwohl die jeweilige Nachricht nicht über die gesamte Kette von DALI-Bussen verläuft.

In der beschriebenen Ausführungsform sind alle Primärleuchten des erfindungsgemäßen Beleuchtungssystems im Hinblick auf die beschriebenen Merkmale vollkommen identisch aufgebaut, wobei wie obenstehend beschrieben die in den Primärleuchten abgelegten jeweiligen Parametrisierungsdaten unterschiedlich sein können. Zur Konfiguration bzw. Parametrisierung des Beleuchtungssystems kann zumindest eine der Primärleuchten, in der beschriebenen Ausführungsform alle Primärleuchten eine Infrarot- oder Bluetooth-Schnittstelle aufweisen zum kabellosen Verbinden mit einem entsprechenden Endgerät wie einem Smartphone oder Tablet. Durch diese Verbindung können insbesondere Verfahrensparameter wie die jeweilige Nennbetrieb-Haltezeit, Basisbetrieb-Haltezeit, die Umgebungslichtschwelle zum Erkennen eines Niedriglichtzustandes etc. an die jeweilige Primärleuchte übermittelt werden.

In solchen Fällen, in welchen alle Parameter für alle Primärleuchten gleich eingestellt sind, kann es zweckmäßig sein, diese an einer einzelnen Primärleuchte zu übertragen und dann über die verketteten Digital-Busse an alle Primärleuchten zu übermitteln. Soweit zumindest einige dieser Parameter spezifisch angepasst an örtliche Gegebenheiten der jeweiligen Primärleuchte ausgewählt werden, können zweckmäßigerweise alle Primärleuchten eine derartige Schnittstelle aufweisen, sodass diese einzeln und getrennt voneinander konfigurierbar bzw. parametrisierbar sind.

Alle Parameter können spezifisch an die jeweilige Beleuchtungsaufgabe angepasst werden. Typische Werte für die Nennbetriebs-Haltezeit TN_hold liegen im Minutenbereich, beispielsweise 2 bis 10 Minuten. Die Basisbetriebs-Haltezeiten werden in der Regel ähnlich eingestellt, beispielsweise im Bereich von 10 Minuten. Der Intervallabstand zwischen der Übermittlung zweier Aktiv-Nachrichten durch eine veranlassende Primärleuchte liegt in der Regel bei einigen 10 Sekunden, beispielsweise bei 20 oder 30 Sekunden. In den meisten Fällen wird für den Nennbetrieb der Dimmgrad der jeweiligen Leuchte auf 100% gesetzt, er kann natürlich je nach Gegebenheiten auch niedriger liegen. Für den Basisbetrieb wird der Dimmpegel noch niedriger eingestellt sein, beispielsweise auf 10 % oder 20%.

Bei den Ausführungsformen der Erfindung, bei welchen die jeweils an die Primärleuchten angeschlossenen Lichtsensoren nicht nur das Umgebungslicht, sondern auch das von den Leuchten abgegebene Licht erfassen, kann sich das Beleuchtungssystem nicht an geänderten Umgebungslichtbedingungen anpassen, wenn regelmäßig und ohne längere Pause innerhalb des von den Objektsensoren überwachten Bereich ein Objekterfassungssignal erfasst wird, d.h. eine Bewegungs- bzw. Präsenzerfassung erfolgt. In diesen Fällen werden wie obenstehend beschrieben kontinuierlich Objekterfassungsnachrichten bzw. Aktiv-Nachrichten versandt, sodass keine zeitliche Lücke entsteht, in welcher die jeweilige Nennbetriebs-Haltezeit abgelaufen ist. In solchen Fällen kann in einer besonderen Ausführungsform eine Gesamt-Nennbetriebszeit, innerhalb welcher der Betriebsmodus des internen Betriebsgerätes der jeweiligen Primärleuchte im Nennbetriebsmodus verbleibt, gemessen und mit einer vorgegebenen Maximaldauer verglichen werden. Wenn diese vorgegebene Maximaldauer überschritten ist, wird die abgelegte Nennbetriebs-Haltezeit der Primärleuchte erniedrigt für einen vorgegebenen Zeitraum, um die Wahrscheinlichkeit zu erhöhen, dass innerhalb der erniedrigten Nennbetriebs-Haltezeit eine Situation eintritt, in welcher der Nennbetrieb abgeschaltet wird, weil die Nennbetriebs-Haltezeit abgelaufen ist und darüber hinaus keine von anderen Primärleuchten abgesandte Aktiv-Nachricht empfangen wurde. Dann kann bei ausgeschalteter Leuchte das aktuelle Umgebungslicht erfasst und durch Vergleichen mit einem vorgegebenen Schwellwert ermittelt werden, ob ein Niedriglichtzustand vorliegt oder nicht. Im letztgenannten Fall kann dann die jeweilige Primärleuchte bzw. ihre zugeordneten Sekundärleuchten ausgeschaltet bleiben, wenn ein Objekterfassungssignal erfasst oder eine Objekterfassungsnachricht bzw. eine Aktiv-Nachricht von einer Primärleuchte empfangen wird, da das Umgebungslicht im Bereich dieser Leuchtengruppe als ausreichend bewertet wurde.

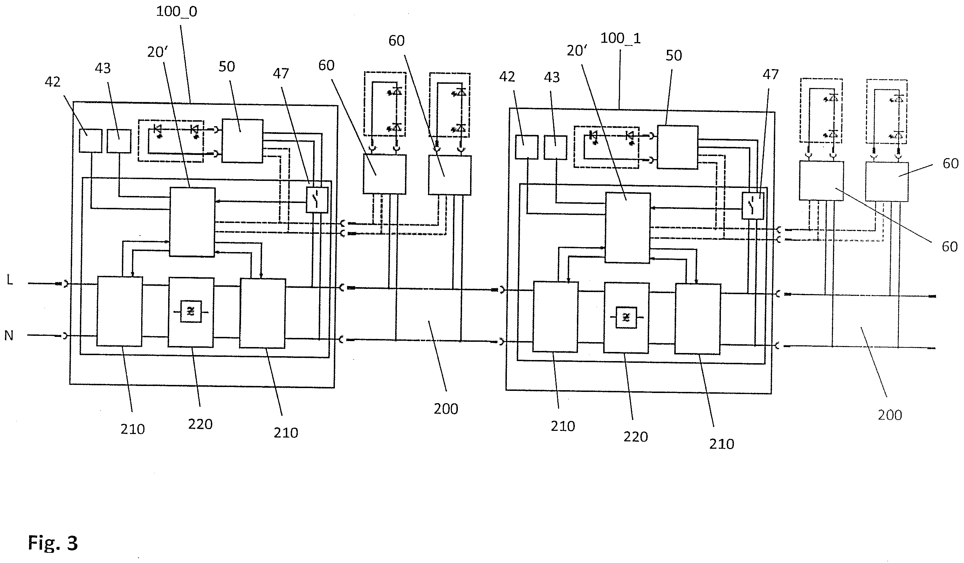

Figur 3 zeigt eine weitere Ausführungsform eines erfindungsgemäßen Beleuchtungssystems im Ausschnitt. Gleiche Teile sind dabei mit den gleichen Bezugszeichen der Figur 1 versehen. Im Unterschied zu dem in Fig. 1 angegebenen System ist die Reihenschaltung der Digitalbus-Abschnitte durch die Verwendung eines sogenannten Powerbus 200 zwischen den Primärleuchten zu realisieren. Dieser Powerbus stellt neben der steuerungstechnisch realisierten Reihenschaltung der Primärleuchten eine geometrische Reihenschaltung der Primärleuchten in versorgungstechnischer Hinsicht bereit, wobei die Primärleuchten in Bezug auf die Versorgungsspannung parallel zueinander am Powerbus angeschlossen sind. Ferner sind auch die beschriebenen Sekundärleuchten in versorgungstechnischer und/oder in steuerungstechnischer Hinsicht an den Powerbus angeschlossen. Die Steuerungseinrichtung 20' einer Primärleuchte 100_0, 100_1 kann dabei jeweils über zwei Powerbus-Schnittstellen 210 mit dem Powerbus 200 verbunden sein, wobei zwischen diesen Schnittstellen eine Bandsperre 220 zur Blockierung der einlaufenden Aufmodulation angeordnet sein kann. Wie aus der Figur hervorgeht, sind die Betriebsgeräte 60 der Sekundärleuchten zusammen mit dem internen Betriebsgerät 50 über einen getrennten DALI-Bus mit den Controllern 20' verbunden. In einer nicht dargestellten Ausführungsform könnten die Sekundarleuchten, respektive deren Betriebsgeräte auch steuerungstechnisch direkt an den Powerbus angeschlossen sein.

Je nach spezifischer Anwendung der oben beschriebenen Ausführungsformen eines erfindungsgemäßen Systems kann vorgesehen sein, dass alle Primärleuchten des Systems auch im Aus-Zustand der Leuchten regelmäßig das Umgebungslicht erfassen und abgespeichert wird, ob ein Niedriglichtzustand vorliegt oder nicht. Diese Information liegt nun vor, wenn eine Objekterfassung im System erfolgt. Darüber hinaus kann eine regelmäßige Messung im Aus-Zustand der Leuchten des Beleuchtungssystems verwendet werden, um durch Mittelwertbildung über eine Anzahl von Messungen eine genauere Aussage zu treffen, ob ein Niedriglichtzustand vorliegt oder nicht, sodass eine genauere Information über die Umgebungslichtverhältnisse vorliegen, wenn zumindest ein Teil der Leuchten aufgrund erfasster Bewegung in den Nennbetrieb übergeht.

### Bezugszeichenliste

- 1: Beleuchtungssystem
- 10_0 bis 10_N: Primärleuchte
- 15_0 bis 15_N: Leuchtengruppe
- 16_0 bis 16_N: DALI-Bus
- 17 0 bis 17_N: Sekundärleuchten
- 20, 20': Hauptcontroller
- 21: DALI-Schnittstelle
- 22: DALI-Schnittstelle
- 30: Controller-Bus
- 40: Hilfscontroller
- 41: Sensorschnittstelle
- 42: Lichtsensor
- 43: Objektsensor
- 44: IR-Transceiver
- 45: Signalisierungseinrichtung
- 46: Versorgung
- 47: Schalter
- 50: Internes DALI-EVG
- 60: DALI-EVG der Sekundärleuchte
- 100_0, 100_1: Primärleuchte
- 200: Powerbus
- 210: Powerbusschnittstelle
- 220:
- TN_hold: Nennbetriebs-Haltezeit
- TB_hold: Basisbetriebs-Haltezeit

## Patentansprüche

1. Beleuchtungssystem (1) umfassend eine Mehrzahl von Primärleuchten (10_0 ... _N; 100_0, 100_1), jeweils aufweisend
ein Leuchtmittel, eine an zumindest zwei Digitalbus-Schnittstellen (21, 22) angeschlossene Steuerungseinrichtung (20, 20'), sowie zumindest eine Sensorschnittstelle (41) zum Anschließen eines Objektsensors (43) zur Bewegungs- oder Präsenzerfassung und eines Lichtsensors (42) zur Erfassung eines Niedriglichtzustands,
und ein von der Steuereinrichtung (20, 20') ansteuerbares, internes Betriebsgerät (50) zum Einstellen von zumindest zwei Betriebsmodi (Basisbetrieb/Nennbetrieb /Aus) zum Speisen des Leuchtmittels,
wobei die Mehrzahl von Primärleuchten (10_0 ... _N; 100_0, 100_1) steuerungstechnisch über Steuerleitungen in Form von Digitalbusabschnitten (16_0 ... _N) seriell verschaltet ist, sodass mindestens eine der Primärleuchten (10_0 ... _N; 100_0, 100_1) über jeweils eine der zumindest zwei Digitalbus- Schnittstellen (21, 22) mit einer ersten benachbarten Primärleuchte aus der Mehrzahl der Primärleuchten (10_0 ... _N; 100_0, 100_1) und über jeweils die andere der zumindest zwei Digitalbus-Schnittstelle (21, 22) mit einer zweiten benachbarten Primärleuchte aus der Mehrzahl der Primärleuchten (10_0 ... _N; 100_0, 100_1) verbunden ist,
und wobei jede der Steuerungseinrichtungen (20, 20') eine Nennbetrieb-Zeitschaltung umfasst und dazu eingerichtet ist, eine Objektpräsenz über die zumindest eine Sensorschnittstelle (41) zu erfassen, wobei die die Objektpräsenz erfassende Primärleuchte als veranlassende Primärleuchte dazu eingerichtet ist, sowohl eine zugeordnete Objekterfassungsnachricht über die zwei Digitalbus-Schnittstellen (21, 22) an die Steuereinrichtungen (20, 20') ihrer beiden benachbarten Primärleuchten zu übermitteln,
als auch dazu eingerichtet ist einen Betriebsmoduswechsel auf Nennbetrieb an dem zugehörigen internen Betriebsgerät (50) der veranlassenden Primärleuchte zum Betrieb des Leuchtmittels zu steuern und die Nennbetrieb-Zeitschaltung zu starten, wenn an der zugehörigen mindestens einen Sensorschnittstelle (41) ein Niedriglichtzustand erfasst wird, **dadurch gekennzeichnet, dass** die Steuereinrichtung der veranlassenden Primärleuchte eingerichtet ist, periodisch eine Aktiv-Nachricht über ihre zumindest zwei Digitalbus-Schnittstellen (21, 22) an ihre beiden benachbarten Primärleuchten zu übermitteln, solange ein Nennbetriebs-Timer der Nennbetriebs-Zeitschaltung eine geringere Zeitdauer anzeigt als eine der veranlassenden Primärleuchte zugeordnete, vorbestimmte Nennbetriebs-Haltezeit (TN_hold) und **dass** die jeweilige Steuereinrichtung (20, 20') der zur veranlassenden Primärleuchte benachbarten Primärleuchten (10_0 ... _N; 100_0, 100_1) ausgebildet ist, eine, über eine der zumindest zwei Digitalbus-Schnittstellen (21, 22) erhaltene Nachricht, über die jeweils andere der zumindest zwei Digitalbus-Schnittstellen (21,22) an ihre jeweils andere benachbarte Primärleuchte aus der Mehrzahl der Primärleuchten (10_0 ... _N; 100_0, 100_1) in Abhängigkeit von vorgegebenen Bedingungen zu übermitteln, und wobei die Primärleuchte, an welche über eine ihrer zumindest zwei Digitalbus-Abschnitten die Objekterfassungsnachricht von einer ihrer beiden benachbarten Primärleuchten übermittelt wird, dazu ausgebildet ist, diese zu empfangen, und im Ansprechen auf den Empfang der Objekterfassungsnachricht ein über ihre Sensorschnittstelle (41) erfasstes Lichtsensorsignal auf einen Niedriglichtzustand zu überprüfen und einen Betriebsmodus-wechsel auf "Nennbetrieb" an ihrem internen Betriebsgerät (50) einzuleiten, wenn ein Niedriglichtzustand vorliegt.

2. Beleuchtungssystem (1) nach Anspruch 1, **wobei** eine Mehrzahl von objektsensorfreie Sekundärleuchten (17_0 ... _N) umfasst ist, die jeweils ein Betriebsgerät (60) zum Speisen eines Leuchtmittels mit Digitalbus-Schnittstelle (21, 22) zum Einstellen von zumindest zwei Betriebsmodi (Basisbetrieb/Nennbetrieb /Aus) aufweisen, wobei zumindest eine der Sekundärleuchten (17_1) an einem Digitalbus-Abschnitt (16_1) angeschlossen ist, der zwischen zwei in Bezug auf die zwei seriell verschalteten, benachbarten Primärleuchten (10_0, 10_1) verläuft und diese verbindet.

3. Beleuchtungssystem (1) nach einem der Ansprüche 1 bis 2, wobei das interne Betriebsgerät (50) zum Speisen des Leuchtmittels der jeweiligen Primärleuchte (10_0 ... _N; 100_0, 100_1) eine Digitalbus-Schnittstelle aufweist, mit dem das jeweilige interne Betriebsgerät (50) an einen der beiden Digitalbusabschnitte (16_0 ... _N) angekoppelt ist, mit dem die jeweilige Primärleuchte an die beiden benachbarten Primärleuchten angeschlossen ist.

4. Beleuchtungssystem (1) nach Anspruch 2 und 3, wobei zumindest eine der Sekundärleuchten (17_0 ... _N) zusammen mit der ihr zugeordneten Primärleuchte (10_0 ... _N) eine Leuchtengruppe (15_0 ... _N) bildet, wobei das Betriebsgerät (60) der Sekundärleuchte am gleichen Digitalbus-Abschnitt (16_0 ... _N) wie das interne Betriebsgerät (50) der zugeordneten Primärleuchte angeschlossen ist, sodass die Betriebsgeräte zum Betreiben der Leuchtmittel der Leuchtengruppe (15_0 ... _N) durch die Steuereinrichtung (20, 20') der zugeordneten Primärleuchte zum Einstellen des gleichen Betriebsmodus ansteuerbar sind, insbesondere durch einen Broadcast-Befehl.

5. Beleuchtungssystem (1) nach einem der Ansprüche 1 bis 4, wobei die Primärleuchten (10_0 ... _N; 100_0, 100_1) jeweils einen von deren Steuereinrichtung (20, 20') ansteuerbaren Schalter (47) aufweisen zum Schalten einer Netzversorgung für das jeweilige interne Betriebsgerät (50) und zum Speisen des jeweiligen Leuchtmittels.

6. Beleuchtungssystem (1) nach einem der Ansprüche 1 bis 5, wobei zumindest eine Primärleuchte (10_0 ... _N) aus der Mehrzahl der Primärleuchten eine Erweiterungseinheit umfasst, welche einen Hilfscontroller (40), die Sensorschnittstelle (41), eine Luftschnittstelle zum kabellosen Verbinden der zumindest einen Primärleuchte mit einer tragbaren Konfigurations- und/oder Parametrisierungseinrichtung sowie eine optische und/oder akustische Signalisierungseinrichtung (45) aufweist.

7. Beleuchtungssystem (1) nach einem der Ansprüche 1 bis 6, wobei zur elektrischen Versorgung der Primärleuchten (100_0, 100_1) ein Powerbus (200) vorgesehen ist, welcher gleichzeitig zwischen den Primärleuchten angeordnete und als die Digitalbusabschnitte (21, 22) wirkende Powerbusabschnitte bereitstellt zur steuerungstechnisch seriellen Verschaltung der Primärleuchten, wobei die Primärleuchten in Bezug auf die elektrische Versorgung parallel am Powerbus angeschlossen sind.

8. Beleuchtungssystem (1) nach Anspruch 7, wobei das interne Betriebsgerät (50) der jeweiligen Primärleuchte (100_0, 100_1) von der jeweiligen Steuereinrichtung (20') über einen DALI-Bus angesteuert wird, wobei an den DALI-Bus ferner zumindest eine objektsensorfreie Sekundärleuchte angeschlossen ist, die auch von der jeweiligen Steuereinrichtung (20') gesteuert und vom Powerbus (200) gespeist wird.

9. Verfahren zum Betreiben eines Beleuchtungssystems nach Anspruch 1, umfassend die Schritte:
erfassen einer Objektpräsenz über die Sensorschnittstelle (41) der veranlassenden Primärleuchte (10_0 ... _N; 100_0, 100_1);
übermitteln einer zugeordneten Objekterfassungsnachricht durch die Steuerungseinrichtung (20, 20') der veranlassenden Primärleuchte (10_0 ... _N; 100_0, 100_1) über ihre mindestens zwei Digitalbusstellen (21, 22) an ihre beiden benachbarten Primärleuchten,
wobei die Steuerungseinrichtung nach Erfassen der Objektpräsenz der veranlassenden Primärleuchte folgende Schritte ausführt, wenn über die Sensorschnittstelle (41) der veranlassenden Primärleuchte (10_0 ... _N; 100_0, 100_1) ein Niedriglichtzustand erfasst wird: wechseln des Betriebsmodus auf Nennbetrieb zum Betrieb des Leuchtmittels und Starten der Nennbetriebs-Zeitschaltung,
**dadurch gekennzeichnet, dass** die Steuereinrichtung der veranlassenden Primärleuchte weiter folgende Schritte ausführt:
periodisches Übermitteln einer Aktiv-Nachricht an die zwei Digitalbus-Schnittstellen (21, 22) der beiden zu der veranlassenden Primärleuchte (10_0 ... _N; 100_0, 100_1) benachbarten Primärleuchten, solange die gemessene Nennbetriebszeit der veranlassenden Primärleuchte kleiner ist als die vorbestimmte, vorgegebene Nennbetriebs-Haltezeit ist;
wobei jedes der internen Betriebsgeräte (50) der zu der veranlassenden Primärleuchte (10_0 ... _N; 100_0, 100_1) benachbarten Primärleuchten die folgenden Schritte ausführt: weiterleiten der Nachrichten in Abhängigkeit von vorgegebenen Bedingungen an die jeweils andere benachbarte Primärleuchte,
wobei die Primärleuchte, welche über eine ihrer zumindest zwei Digitalbus-Abschnitten die Objekterfassungsnachricht von einer Ihrer beiden benachbarten Primärleuchten empfängt, im Ansprechen auf den Empfang der Objekterfassungsnachricht ein über ihre Sensorschnittstelle (41) erfasstes Lichtsensorsignal auf einen Niedriglichtzustand überprüft und einen Betriebsmoduswechsel auf "Nennbetrieb" an dem internen Betriebsgerät (50) einleitet, wenn ein Niedriglichtzustand vorliegt.

10. Verfahren nach Anspruch 9, wobei das interne Betriebsgerät (50) der jeweiligen Primärleuchte (10_0 ... _N; 100_0, 100_1) auf einen Betriebsmodus "Aus" oder einen Betriebsmodus "Basis" mit vorgegebenem, zum Nennbetrieb vermindertem Dimmgrad des Leuchtmittels eingestellt wird, wenn die gemessene Nennbetriebszeit die vorgegebene Nennbetriebs-Haltezeit (TN_hold) erreicht und zu diesem Zeitpunkt die jeweilige Primärleuchte (10_0 ... _N; 100_0, 100_1) keine Aktiv-Nachricht empfängt.

11. Verfahren nach einem der Ansprüche 9 oder 10, wobei zumindest eine objektsensorfreie Sekundärleuchte (17_0 ... _N) an einem der zwischen zwei benachbarten Primärleuchten verlaufenden Digitalbus-Abschnitt (21, 22) angeschlossen wird, und an einem Betriebsgerät (60) der zumindest einen objektsensorfreien Sekundärleuchte (17_0 ... _N) über eine Digitalbus-Schnittstelle zumindest zwei Betriebsmodi zum Speisen eines Leuchtmittels (Basisbetrieb/Nennbetrieb/Aus) eingestellt werden, wobei die zumindest eine Sekundärleuchte, respektive deren Betriebsgerät (60), durch die Steuereinrichtung (20, 20') einer der beiden benachbarten Primärleuchten zum Einstellen des gleichen Betriebsmodus wie der Betriebsmodus des internen Betriebsgerätes (50) der einen der beiden Primärleuchten angesteuert wird.

12. Verfahren nach einem der Ansprüche 9 bis 11, **wobei** bei der Erstellung der Objekterfassungsnachricht oder der Aktiv-Nachricht durch die Steuerungseinrichtung (20, 20') der veranlassenden Primärleuchte ein vorgegebener, die Reichweite der jeweiligen Nachricht angebender Ausgangszählwert in die jeweilige Nachricht aufgenommen wird, wobei an ihren beiden benachbarten, die jeweilige Nachricht empfangenden Primärleuchten der Zählwert jeweils um Eins erniedrigt und die jeweilige Nachricht mit erniedrigtem Zählwert (Differenz) weitergegeben wird.

13. Verfahren nach Anspruch 12, **wobei** die jeweilige Nachricht ausgehend von der veranlassenden Primärleuchte, solange sukzessiv jeweils weiter an benachbarte Primärleuchten übermittelt wird, bis der Zählwert einen vorgegebenen Wert aufweist.

14. Verfahren nach einem der Ansprüche 10 bis 13, **wobei** eine bidirektionale Kommunikation über die Digitalbus-Schnittstellen (21, 22) zwischen den benachbarten Primärleuchten sowie zwischen den Primärleuchten und den Sekundärleuchten (17_1) ohne Adressierung der jeweiligen Busteilnehmer, jedoch mit unterschiedlichen Kommunikationsprotokollen durchgeführt wird.

15. Verfahren nach einem der Ansprüche 9 bis 14, wobei nach dem Empfang der Objekterfassungsnachricht an der jeweiligen Primärleuchte (10_0 ... _N; 100_0, 100_1) ein Betriebsmoduswechsel auf "Nennbetrieb" an dem internen Betriebsgerät (50) der jeweiligen Primärleuchte verzögert durchgeführt wird.

16. Verfahren nach einem der Ansprüche 9 bis 15, wobei in einer jeweiligen Primärleuchte (10_0 ... _N; 100_0, 100_1) eine zusammenhängende Gesamt-Nennbetriebszeit ermittelt, insbesondere gemessen wird, innerhalb welcher der Betriebsmodus des internen Betriebsgerätes (50) im Nennbetriebsmodus verbleibt, und bei Überschreiten der gemessenen Gesamt-Nennbetriebszeit von einer vorgegebenen Maximaldauer eine vorgegebene erste Nennbetrieb-Haltezeit (TN_hold) auf eine zweite, zur ersten kleineren vorgegebene Nennbetrieb-Haltezeit gesetzt wird.

17. Verfahren nach einem der Ansprüche 9 bis 16, wobei die von der veranlassenden Primärleuchte (10_0 ... _N; 100_0, 100_1) über ihre zwei Digitalbus-Schnittstellen (21, 22) an ihre beiden benachbarten Primärleuchten versandte Objekterfassungsnachricht und die Aktiv- Nachricht identisch sind.

18. Verfahren nach einem der Ansprüche 9 bis 17, **wobei** von der Steuereinrichtung (20, 20') der jeweiligen Primärleuchte (10_0 ... _N; 100_0, 100_1) empfangene Aktiv-Nachrichten oder eine von dieser empfangene Aktiv-Nachricht mit einer von dieser Primärleuchte (10_0 ... _N; 100_0, 100_1) veranlassten Aktiv-Nachricht zur Verminderung des Datenverkehr synchronisiert wird, derart, dass zumindest zwei Aktiv-Nachrichten als einzelne Aktiv-Nachricht weitergeleitet werden.

## Claims

1. Lighting system (1) comprising a plurality of primary luminaires (10_0 ..._N; 100_0, 100_1), each comprising
a light source, a control device (20, 20') connected to at least two digital bus interfaces (21, 22) as well as at least one sensor interface (41) for connecting an object sensor (43) for motion or presence detection and a light sensor (42) for detecting a low light condition
and an internal operating device (50) that can be triggered by the control device (20, 20') for setting at least two operating modes (basic operation/nominal operation/off) for supplying the light source,
wherein the plurality of primary luminaires (10_0 ..._N; 100_0, 100_1) is controllably connected in series by control lines in the form of digital bus portions (16_0 ..._N) so that at least one of the primary luminaires (10_0 ..._N; 100_0, 100_1) is connected via respectively one of the at least two digital bus interfaces (21, 22) with a first adjacent primary luminaire from the plurality of primary luminaires (10_0 ..._N; 100_0, 100_1) and via respectively the other of the at least two digital bus interfaces (21, 22) with a second adjacent primary luminaire from the plurality of primary luminaires (10_0 ..._N; 100_0, 100_1)
and wherein each of the control devices (20, 20') comprises a nominal operation timing circuit and is designed to detect the presence of an object via the at least one sensor interface (41), wherein the primary luminaire detecting the object presence is designed as originating primary luminaire, as well as to transmit an associated object detection message via the two digital bus interfaces (21, 22) to the control devices (20, 20') of its two adjacent primary luminaires
and is also designed to control an operating mode change to nominal operation on the associated internal operating device (50) of the originating primary luminaire for operating the light source and to initiate the nominal operation timing circuit if a low light condition is detected on the associated at least one sensor interface (41),
**characterized in that** the control device of the originating primary luminaire is designed to periodically transmit an active message via its at least two digital bus interfaces (21, 22) to its two adjacent primary luminaires as long as a nominal operation timer of the nominal operation timing circuit indicates a lower duration than a predetermined nominal operation holding time (TN_hold) associated to the originating primary luminaire and that the respective control device (20, 20') of the primary luminaires (10_0 ..._N; 100_0, 100_1) adjacent to the originating primary luminaire is designed to transmit a message received via one of the at least two digital bus interfaces (21, 22) via the respectively other of the at least two digital bus interfaces (21, 22) to its respectively other adjacent primary luminaire from the plurality of primary luminaires (10_0 ..._N; 100_0, 100_1) depending on predefined conditions and wherein the primary luminaire to which the object detection message is transmitted via one of its at least two digital bus portions by one of its two adjacent primary luminaires is designed to receive this message and in response to the receipt of the object detection message to check a light sensor signal detected via its sensor interface (41) for a low light condition and to induce an operating mode change to "nominal operation" on its internal operating device (50) if a low light condition is met.

2. Lighting system (1) according to claim 1, wherein a plurality is comprised of object sensor free secondary luminaires (17_0 ... _N) that each have an operating device (60) for supplying a light source with digital bus interfaces (21, 22) for setting at least two operating modes (basic operation/nominal operation/off), wherein at least one of the secondary luminaires (17_1) is connected to a digital bus portion (16_1) that extends between two adjacent primary luminaires (10_0, 10_1) connected in series thereto and that connects them.

3. Lighting system (1) according to one of the claims 1 to 2, wherein the internal operating device (50) for supplying the light source of the respective primary luminaire (10_0 ..._N; 100_0, 100_1) has a digital bus interface with which the respective internal operating device (50) is coupled to one of the two digital bus portions (16_0 ..._N) with which the respective primary luminaire is connected to the two adjacent primary luminaires.

4. Lighting system (1) according to claim 2 and 3, wherein at least one of the secondary luminaires (17_0 ... _N) forms with the primary luminaire associated thereto (10_0 ..._N) a group of luminaires (15_0 ..._N), wherein the operating device (60) of the secondary luminaire is connected to the same digital bus portion (16_0 ..._N) as the internal operating device (50) of the associated primary luminaire so that the operating devices for operating the light sources of the group of luminaires (15_0 ..._N) can be triggered by the control device (20, 20') of the associated primary luminaire for setting the same operating mode, in particular via a broadcast command.

5. Lighting system (1) according to one of the claims 1 to 4, wherein the primary luminaires (10_0 ..._N; 100_0, 100_1) have each one switch (47) that can be triggered by their control device (20, 20') for switching a mains supply for the respective internal operating device (50) and for supplying the respective light source.

6. Lighting system (1) according to one of the claims 1 to 5, wherein at least one primary luminaire (10_0 ..._N) from the plurality of primary luminaires comprises an extension unit that has an auxiliary controller (40), the sensor interface (41), an air interface for the wireless connection of the at least one primary luminaire with a portable configuration and/or parameterization device as well as an optical and/or acoustic signaling device (45).

7. Lighting system (1) according to one of the claims 1 to 6, wherein a power bus (200) is provided for the electric supply of the primary luminaires (10_0 ..._N; 100_0, 100_1) that simultaneously makes available power bus portions placed between the primary luminaires and acting as the digital bus portions (21, 22) for the controllable connection in series of the primary luminaires, wherein the primary luminaires are connected to the power bus in parallel with respect to the electric supply.

8. Lighting system (1) according to claim 7, wherein the internal operating device (50) of the respective primary luminaire (100_0, 100_1) is triggered by the respective control device (20') via a DALI bus, wherein at least one object sensor free secondary luminaire is furthermore connected to the DALI bus, this secondary luminaire being also controlled by the respective control device (20') and supplied by the power bus (200).

9. Method for operating a lighting system according to claim 1 comprising the steps:
detection of the presence of an object via the sensor interface (41) of the originating primary luminaire (10_0 ..._N; 100_0, 100_1);
transmission of an associated object detection message by the control device (20, 20') of the originating primary luminaire (10_0 ..._N; 100_0, 100_1) via its at least two digital bus interfaces (21, 22) to its two adjacent primary luminaires, wherein, after detection of the presence of an object by the originating primary luminaire, the control device carries out the following steps if a low light condition is detected via the sensor interface (41) of the originating primary luminaire (10_0 ..._N; 100_0, 100_1):
change of the operating mode to nominal operation for operating the light source and initiating the nominal operation timing circuit,
**characterized in that** the control device of the originating primary luminaire carries out the further following steps:
periodic transmission of an active message to the two digital bus interfaces (21, 22) of the two primary luminaires adjacent to the originating primary luminaire (10_0 ..._N; 100_0, 100_1) as long as the measured nominal operating time of the originating primary luminaire is lower than the predefined predetermined nominal operating holding time,
wherein each of the internal operating devices (50) of the primary luminaires adjacent to the originating primary luminaire (10_0 ..._N; 100_0, 100_1) carries out the following steps:
transmission of the messages depending on predefined conditions to the respective other adjacent primary luminaire,
wherein the primary luminaire that receives the object detection message of one of its two adjacent primary luminaires via one of its at least two digital bus portions checks, in response to the receipt of the object detection message, a light sensor signal detected via its sensor interface (41) for a low light condition and induces an operating mode change to "nominal operation" on the internal operating device (50) if a low light condition is met.

10. Method according to claim 9, wherein the internal operating device (50) of the respective primary luminaire (10_0 ..._N; 100_0, 100_1) is set to an operating mode (Off) or to an operating mode "basic" with a predefined dimming degree of the light source if the measured nominal operating time reaches the predefined nominal operating holding time (TN_hold) and if the respective primary luminaire (10_0 ..._N; 100_0, 100_1) does not receive any active message at this time.

11. Method according to one of the claims 9 or 10, wherein at least one object sensor free secondary luminaire (17_0 ... _N) is connected to one of the digital bus portions (21, 22) extending between two adjacent primary luminaires and at least two operating modes are set on an operating device (60) of the at least one object sensor free secondary luminaire (17_0 ... _N) via a digital bus interface for supplying a light source (basic operation/nominal operation/off), wherein the at least one secondary luminaire or the operating device (60) thereof is triggered by the control device (20, 20' of one of the two adjacent primary luminaires for setting the same operating mode as the operating mode of the internal operating device (50) of the one of the two primary luminaires.

12. Method according to one of the claims 9 to 11, wherein a predefined initial count value indicating the reach of the respective message is recorded in the respective message when producing the object detection message or the active message by the control device (20, 20') of the originating primary luminaire, wherein the count value is respectively reduced by one on its two adjacent primary luminaires that receive the respective message and the respective message is transmitted with a reduced count value (difference).

13. Method according to claim 12, wherein, starting from the originating primary luminaire, the respective message is successively further transmitted to adjacent primary luminaires until the count value has a predefined value.

14. Method according to one of the claims 10 to 13, wherein a bidirectional communication is carried out via the digital bus interfaces (21, 22) between the adjacent primary luminaires as well as between the primary luminaires and the secondary luminaires (17_1) without addressing the respective bus subscribers, however with different communication protocols.

15. Method according to one of the claims 9 to 14, wherein after the receipt of the object detection message on the respective primary luminaire (10_0 ..._N; 100_0, 100_1) an operating mode change to "nominal operation" is carried out with a time delay on the internal operating device (50) of the respective primary luminaire.

16. Method according to one of the claims 9 to 15, wherein a coherent global nominal operating time is detected, in particular is measured, in a respective primary luminaire (10_0 ..._N; 100_0, 100_1), time within which the operating mode of the internal operating device (50) remains in the nominal operation mode and, when the measured global nominal operating time of a predefined maximal duration is exceeded, a predefined first nominal operating holding time (TN_hold) is set to a predefined second nominal operating holding time that is lower than the first one.

17. Method according to one of the claims 9 to 16, wherein the object detection message sent by the originating primary luminaire (10_0 ..._N; 100_0, 100_1) via its two digital bus interfaces (21, 22) to its two adjacent primary luminaires and the active message are identical.

18. Method according to one of the claims 9 to 17, wherein active messages received by the control device (20, 20') of the respective primary luminaire (10_0 ..._N; 100_0, 100_1) or an active message received therefrom is synchronized with an active message originating from this primary luminaire (10_0 ..._N; 100_0, 100_1) for reducing the data traffic in such a manner that at least two active messages are transmitted as a single active message.

## Revendications

1. Système d'éclairage (1) comprenant une multitude de luminaires primaires (10_0 ... _N ; 100_0, 100_1) présentant chacun
un moyen d'éclairage, un dispositif de commande (20, 20') branché à au moins deux interfaces de bus numérique (21, 22) ainsi qu'au moins une interface de détecteur (41) pour brancher un détecteur d'objet (43) pour la détection de mouvement ou de présence et un capteur de lumière (42) pour la détection d'un état de faible lumière
et un appareillage de commande interne (50) qui peut être commandé par le dispositif de commande (20, 20') pour régler au moins deux modes de fonctionnement (mode de base/mode nominal/arrêt) pour alimenter le moyen d'éclairage,
cependant que la multitude de luminaires primaires (10_0 ... _N ; 100_0, 100_1) est branchée en série pour ce qui est de la technique de commande par des conduites de commande sous forme de sections de bus numériques (16_0 ... _N) si bien qu'au moins l'un des luminaires primaires (10_0 ... _N ; 100_0, 100_1) est relié par respectivement l'une des au moins deux interfaces de bus numérique (21, 22) avec un premier luminaire primaire voisin de la multitude de luminaires primaires (10_0 ... _N ; 100_0, 100_1) et par respectivement l'autre des au moins deux interfaces de bus numérique (21, 22) avec un second luminaire primaire voisin de la multitude de luminaires primaires (10_0 ... _N ; 100_0,100_1)
et cependant que chacun des dispositifs de commande (20, 20') comprend un circuit de temporisation de mode nominal et est agencé pour détecter une présence d'objet par la au moins une interface de détecteur (41), le luminaire primaire qui détecte la présence d'objet étant agencé en tant que luminaire primaire opérationnel aussi bien pour transmettre un message associé de détection d'objet par les deux interfaces de bus numérique (21, 22) aux dispositifs de commande (20, 20') de ses deux luminaires primaires voisins qu'également pour commander un changement de mode de fonctionnement sur le mode nominal sur l'appareillage de commande interne associé (50) du luminaire primaire opérationnel pour faire fonctionner le moyen d'éclairage et pour démarrer le circuit de temporisation de mode nominal lorsqu'un état de faible lumière est détecté sur la au moins une interface de détecteur associée (41),
**caractérisé en ce que** le dispositif de commande du luminaire primaire opérationnel est agencé pour transmettre périodiquement un message actif par ses au moins deux interfaces de bus numérique (21, 22) à ses deux luminaires primaires voisins aussi longtemps qu'un temporisateur de mode nominal du circuit de temporisation de mode nominal indique une durée inférieure à un temps de maintien du mode nominal (TN_hold) prédéfini associé au luminaire primaire opérationnel et que le dispositif de commande respectif (20, 20') des luminaires primaires voisins du luminaire primaire opérationnel (10_0 ... _N ; 100_0, 100_1) est configuré pour transmettre un message reçu par l'un des au moins deux interfaces de bus numérique (21, 22) à son autre luminaire primaire voisin respectif de la multitude de luminaires primaires (10_0 ... _N ; 100_0, 100_1) par l'autre des au moins deux interfaces de bus numérique (21, 22) en fonction de conditions prédéfinies et cependant que le luminaire primaire auquel le message de détection d'objet est transmis par l'une de ses au moins deux sections de bus numérique par l'un de ses deux luminaires primaires voisins est configuré pour recevoir celui-ci et, en réaction à la réception du message de détection d'objet, pour vérifier si un signal de détecteur de lumière détecté par son interface de détecteur (41) indique un niveau de faible lumière et pour lancer un changement de mode de fonctionnement sur "mode nominal" sur son appareillage de commande interne (50) lorsqu'il y a un état de faible lumière.

2. Système d'éclairage (1) selon la revendication 1, cependant qu'une multitude de luminaires secondaires exempts de détecteur d'objet (17_0 ... _N) est comprise, ces luminaires présentant chacun un appareillage de commande (60) pour alimenter un moyen d'éclairage avec une interface de bus numérique (21, 22) pour régler au moins deux modes de fonctionnement (mode de base/mode nominal/arrêt), cependant qu'au moins l'un des luminaires secondaires (17_1) est branché à une section de bus numérique (16_1) qui passe entre deux luminaires primaires voisins (10_0, 10_1) reliés en série par rapport à celui-ci et relie ceux-ci.

3. Système d'éclairage (1) selon l'une des revendications 1 à 2, l'appareillage de commande interne (50) pour l'alimentation du moyen d'éclairage du luminaire primaire respectif (10_0 ... _N ; 100_0, 100_1) présentant une interface de bus numérique avec laquelle l'appareillage de commande interne respectif (50) est couplé à l'une des deux sections de bus numérique (16_0 ... _N) avec laquelle le luminaire primaire respectif est branché aux deux luminaires primaires voisins.

4. Système d'éclairage (1) selon la revendication 2 ou 3, cependant qu'au moins l'un des luminaires secondaires (17_0 ... _N) forme un groupe de luminaires (15_0 .... _N) avec le luminaire primaire qui lui est associé (10_0 ... _N), cependant que l'appareillage de commande (60) du luminaire secondaire est branché à la même section de bus numérique (16_0 ... _N) que l'appareillage de commande interne (50) du luminaire primaire associé si bien que les appareillages de commande pour faire fonctionner les moyens d'éclairage du groupe de luminaires (15_0 .... _N) peuvent être commandés par le dispositif de commande (20, 20') du luminaire primaire associé pour régler le même mode de fonctionnement, en particulier par une commande de diffusion.

5. Système d'éclairage (1) selon l'une des revendications 1 à 4, cependant que les luminaires primaires (10_0 ... _N ; 100_0, 100_1) présentent chacun un commutateur (47) qui peut être commandé par leur dispositif de commande (20, 20') pour commuter une alimentation de secteur pour l'appareillage de commande interne respectif (50) et pour alimenter le moyen d'éclairage respectif.

6. Système d'éclairage (1) selon l'une des revendications 1 à 5, cependant qu'au moins un luminaire primaire (10_0 ... _N) de la multitude des luminaires primaires comprend un dispositif d'extension qui présente un contrôleur auxiliaire (40), l'interface de détecteur (41), une interface radio pour la connexion sans fil de l'au moins un luminaire primaire avec un dispositif de configuration et/ou de paramétrage portable ainsi qu'un dispositif de signalisation optique et/ou acoustique (45).

7. Système d'éclairage (1) selon l'une des revendications 1 à 6, cependant qu'il est prévu un bus de puissance (200) pour l'alimentation électrique des luminaires primaires (10_0, 100_1) qui met à disposition des sections de bus de puissance placées simultanément entre les luminaires primaires et agissant comme les sections de bus numérique (21, 22) pour la connexion en série sur le plan de la technique de commande des luminaires primaires, les luminaires primaires étant branchés sur le bus de puissance en parallèle pour ce qui est de l'alimentation électrique.

8. Système d'éclairage (1) selon la revendication 7, l'appareillage de commande interne (50) du luminaire primaire respectif (100_0, 100_1) étant commandé par le dispositif de commande respectif (20') par un bus DALI, cependant qu'au moins un luminaire secondaire exempt de détecteur d'objet est de plus branché sur le bus DALI, luminaire secondaire qui est également commandé par le dispositif de commande respectif (20') et alimenté par le bus de puissance (200).

9. Procédé pour faire fonctionner un système d'éclairage selon la revendication 1 qui comprend les étapes de :
détection de la présence d'un objet par l'interface du détecteur (41) du luminaire primaire opérationnel (10_0 ... _N ; 100_0, 100_1) ;
transmission d'un message de détection d'objet associée par le dispositif de commande (20, 20') du luminaire primaire opérationnel (10_0 ... _N ; 100_0, 100_1) par ses au moins deux interfaces de bus numérique (21, 22) à ses deux luminaires primaires voisins,
cependant que le dispositif de commande exécute, après la détection de la présence d'un objet du luminaire primaire opérationnel, les étapes suivantes si un état de lumière faible est détecté par l'interface de détecteur (41) du luminaire primaire opérationnel (10_0 ... _N ; 100_0, 100_1) :
changement du mode de fonctionnement sur mode nominal pour faire fonctionner le moyen d'éclairage et lancer le circuit de temporisation du mode nominal,
**caractérisé en ce que** le dispositif de commande du luminaire primaire opérationnel exécute les étapes ultérieures suivantes :
transmission périodique d'un message actif aux deux interfaces de bus numériques (21, 22) des deux luminaires primaires voisins du luminaire primaire opérationnel (10_0 ... _N ; 100_0, 100_1) tant que la durée de fonctionnement nominal mesurée du luminaire primaire opérationnel est inférieure au temps de maintien du mode nominal prédéfini prédéterminé, cependant que chacun des appareillages de commande interne (50) des luminaires primaires voisins du luminaire primaire opérationnel (10_0 ... _N ; 100_0, 100_1) exécute les étapes suivantes :
transmission des messages en fonction de conditions prédéfinies à l'autre luminaire primaire voisin respectif,
cependant que le luminaire primaire qui reçoit le message de détection d'objet d'un de ses deux luminaires primaires voisins par l'une de ses au moins deux sections de bus numérique vérifie, en réaction à la réception du message de détection d'objet, si un signal de détecteur de lumière détecté par son interface de détecteur (41) indique un niveau de faible lumière et lance un changement de mode de fonctionnement sur "mode nominal" sur l'appareillage de commande interne (50) s'il y a un état de faible lumière.

10. Procédé selon la revendication 9, l'appareillage de commande interne (50) du luminaire primaire respectif (10_0 ... _N ; 100_0, 100_1) étant réglé sur un mode de fonctionnement "Arrêt" ou un mode de fonctionnement "base" avec un degré d'atténuation prédéfini du moyen d'éclairage, réduit par rapport au mode nominal, lorsque le temps du mode nominal mesuré atteint le temps de maintien prédéfini du mode nominal (TN_hold) et que le luminaire primaire respectif (10_0 ... _N ; 100_0, 100_1) ne reçoit, à ce moment, aucun message actif.

11. Procédé selon l'une des revendications 9 ou 10, au moins un luminaire secondaire exempt de détecteur d'objet (17_0 ... _N) étant branché à l'une des sections de bus numérique (21, 22) qui passe entre deux luminaires primaires voisins et au moins deux modes de fonctionnement étant réglés sur un appareillage de commande (60) de l'au moins un luminaire secondaire exempt de détecteur d'objet (17_0 ... _N) par une interface de bus numérique pour alimenter un moyen d'éclairage (mode de base/mode nominal/arrêt), cependant que le au moins un luminaire secondaire ou son appareillage de commande (60) est commandé par le dispositif de commande (20, 20') d'un des deux luminaires primaires voisins pour régler le même mode de fonctionnement que le mode de fonctionnement de l'appareillage de commande interne (50) de l'un des deux luminaires primaires.

12. Procédé selon l'une des revendications 9 à 11, cependant qu'une valeur de comptage de départ prédéfinie qui indique la portée du message respectif est enregistrée lors de la création du message de détection d'objet ou du message actif par le dispositif de commande (20, 20') du luminaire primaire opérationnel, la valeur de comptage étant respectivement diminuée d'un à ses deux luminaires primaires voisins qui reçoivent le message respectif et le message respectif étant transmis avec la valeur de comptage diminuée (différence).

13. Procédé selon la revendication 12, le message respectif continuant à être transmis de manière successive respectivement aux luminaires primaires voisins en partant du luminaire primaire opérationnel jusqu'à ce que la valeur de comptage présente une valeur prédéfinie.

14. Procédé selon l'une des revendications 10 à 13, une communication bidirectionnelle étant exécutée par les interfaces de bus numérique (21, 22) entre les luminaires primaires voisins ainsi qu'entre les luminaires primaires et les luminaires secondaires (17_1) sans adressage des usagers respectifs du bus, cependant avec différents protocoles de communication.

15. Procédé selon l'une des revendications 9 à 14, cependant qu'après réception du message de détection d'objet sur le luminaire primaire respectif (10_0 ... _N ; 100_0, 100_1) un changement de mode de fonctionnement est exécuté de manière temporisée sur "mode nominal" sur l'appareillage de commande interne (50) du luminaire primaire respectif.

16. Procédé selon l'une des revendications 9 à 15, cependant qu'une durée de fonctionnement nominale totale cohérente est déterminée dans un luminaire primaire respectif (10_0 ... _N ; 100_0, 100_1), en particulier est mesurée, durée pendant laquelle le mode de fonctionnement de l'appareillage de commande interne reste en mode de fonctionnement nominal et qu'un premier temps de maintien prédéfini du mode nominal (TN_hold) est mis sur un second temps prédéfini de maintien du mode nominal, inférieur au premier, lorsque la durée de fonctionnement en mode nominal totale mesurée est dépassée d'une durée maximale prédéfinie.

17. Procédé selon l'une des revendications 9 à 16, le message de détection d'objet envoyé par le luminaire primaire opérationnel (10_0 ... _N ; 100_0, 100_1) par ses deux interfaces de bus numérique (21, 22) à ses deux luminaires primaires voisins et le message actif étant identiques.

18. Procédé selon l'une des revendications 9 à 17, des messages actifs reçus par le dispositif de commande (20, 20') du luminaire primaire respectif (10_0 ... _N ; 100_0, 100_1) ou un message actif reçu par celui-ci étant synchronisé avec un message actif induit par ce luminaire primaire (10_0 ... _N ; 100_0, 100_1) pour réduire le trafic de données de telle manière qu'au moins deux messages actifs sont transmis comme un seul message actif.
